# EUROPÄISCHE PATENTANMELDUNG

(11) **EP 4 650 086 A2**
(43) Veröffentlichungstag der Anmeldung: **19.11.2025**
(21) Anmeldenummer: 25205885.4
(22) Anmeldetag: 15.10.2021
(51) Int. Cl.: B23B 31/30

(54) **KUPPLUNGSVORRICHTUNG ZUR LÖSBAREN HERSTELLUNG EINER HYDRAULISCHEN VERBINDUNG**

(30) Priorität: 20.10.2020 DE 102020127608
(62) Teilanmeldung aus: 21798586.0
(71) Anmelder: WTO Vermögensverwaltung GmbH, 77797 Ohlsbach (DE)
(72) Erfinder: Schmieder, Markus, 77791 Berghaupten (DE); Jansen, Karlheinz, 77746 Schutterwald (DE)
(74) Vertreter: DREISS Patentanwälte PartG mbB

(57) **Zusammenfassung**

Es wird eine Kupplungsvorrichtung für Fluid vorgeschlagen, die sehr einfach im Aufbau ist und wenig Bauraum benötigt, so dass sie auch bei feststehenden oder angetriebenen Werkzeughaltern und in anderen beengten Einbausituationen zum Einsatz kommen kann.

## Beschreibung

Im Bereich der Fertigungstechnik werden häufig fluidisch betätigte Spannsysteme in angetriebenen oder feststehenden Werkzeughaltern eingesetzt. Die Werkzeughalter umfassen eine (Zentrier-)Aufnahme. In die Aufnahme wird ein Adapter oder ein Werkzeug eingesetzt. Anschließend wird das Spannsystem betätigt, um den Adapter bzw. das Werkzeug zu spannen.

Um die Vielzahl verschiedener Werkzeuge, wie zum Beispiel Drehmeißel, Bohrer oder Fräser in der gleichen Aufnahme spannen zu können, werden häufig Adapter eingesetzt. Diese Adapter bilden die Schnittstelle zur Aufnahme und zum Spannsystem von zum Beispiel einem Werkzeughalter. Aus Gründen der sprachlichen Vereinfachungen wird das Bauteil, welches in einer fluidbetätigten Spannvorrichtung eines Werkzeughalters gespannt wird, als "Adapter" bezeichnet. Es kann sich dabei auch um ein Werkzeug, eine Werkzeugaufnahme (z.B. Bohrfutter) und anderes mehr handeln.

Im Folgenden umfasst der Begriff "Fluid" sowohl Flüssigkeiten (z.B. Hydraulikfluid) als auch Druckluft. Eine "fluidische Betätigung" umfasst demnach sowohl eine Betätigung mit Flüssigkeiten (z.B. Hydraulik) als auch eine pneumatische Betätigung.

Der Vorteil an einer fluidischen Spannung ist die hohe Spannkraft bei gleichzeitig relativ geringen Abmessungen. Außerdem sind fluidisch betätigte Aktuatoren sehr robust und den rauen Einsatzbedingungen in der produzierenden Industrie über eine lange Betriebszeit gewachsen.

Es gibt Spannsysteme bei denen die Spannkraft durch eine Druckfeder dauernd aufrechterhalten wird. Zum Lösen des Spannsystems muss die Federkraft überwunden werden und ein Zugbolzen von der Spanstellung in die Offenstellung bewegt werden. In diesem Fall ist ein einfach wirkender Fluidzylinder, nachfolgend auch als "Zylinderaufbau" oder verkürzt als "Zylinder" bezeichnet, ausreichend. Ein solcher einfach wirkende Zylinder hat nur einen Fluid-Anschluss. Bei Spannsystemen mit Selbsthemmung und ohne eine Feder, welche die Spannkraft dauernd aufbringt, sind doppeltwirkende Zylinder(-aufbauten) erforderlich, um den Zugbolzen der Spannsysteme sowohl von der Offenstellung in die Spannstellung als auch von der Spannstellung in die Offenstellung bewegen zu können.

Außerdem gibt es Spannsysteme, die dauerhaft durch ein unter Druck stehendes Fluid in der Spannstellung gehalten werden und/oder bei denen das unter Druck stehende Fluid zur Sicherung der Spannstellung dient.

In den Zeiten zwischen den Zerspanungsprozessen, in denen der Werkzeughalter nicht in Betrieb ist, ist es möglich, Adapter auszutauschen um z.B. verschlissene Schneidwerkzeuge gegen neue Schneidwerkzeuge oder aber Schneidwerkzeuge für eine Drehbearbeitung durch Schneidwerkzeuge für eine Bohrbearbeitung zu ersetzen.

Es ist also möglich in der Bearbeitungsposition, wenn der Werkzeughalter nicht in Betrieb ist, und außerhalb der Bearbeitungsposition, während gleichzeitig ein anderer Werkzeughalter mit seinem Schneidwerkzeug in der Bearbeitungsposition eine Zerspannung durchführt, den Adapter des Werkzeughalters auszutauschen, der nicht in Betrieb ist.

Um die gewünschte Bewegung (Spannen oder Lösen) ausführen zu können, muss unter Druck stehendes Fluid in den Zylinder geleitet werden. Das Spannen oder Lösen des Spannsystems erfolgt zu Zeiten in denen der Werkzeughalter nicht in Betrieb ist.

In allen Fällen befindet sich der Werkzeughalter im Arbeitsraum eines Drehzentrums oder einer anderen Werkzeugmaschine.

Die Zufuhr des Fluids von der Pumpe zu den Zylindern ist besonders aufwändig, da die zuführenden Leitungen durch die ganzen Achssysteme einer Werkzeugmaschine bis zum Werkzeughalter und bei angetriebenen Werkzeugen auch in die, im Betriebsfall rotierende, Spindel erfolgen muss.

Kurz gesagt: es besteht ein Bedarf an einer lösbaren Fluidverbindung zwischen einer Fluid-Versorgung und dem Fluidzylinder in dem Werkzeughalter. Diese lösbare Verbindung wird nachfolgend auch als Kupplungsvorrichtung bezeichnet.

Aus der EP 1 058 044 B1 ist ein Kupplungssystem bekannt, mit dessen Hilfe zwei Leitungen, die ein unter Druck stehendes Fluid enthalten, lösbar miteinander verbunden und anschließend wieder gelöst werden können. Dieses Kupplungssystem hat sich in der Praxis bewährt. Allerdings ist es sehr aufwändig und benötigt viel Bauraum in axialer Richtung.

Dies liegt darin begründet, dass sowohl das erste Kupplungsteil (female) zwei hintereinander angeordnete Ventile (Hilfs- und Hauptsteuerventil) aufweist. Desgleichen weist das zweite Kupplungsteil (male) ebenfalls zwei hintereinander angeordnete Ventile auf. Diese Aneinanderreihung von insgesamt vier Ventilen (zwei Hauptventile und zwei Hilfsventile) erfordert viel Bauraum, sie ist aufwändig in der Fertigung und daher im Zusammenhang mit Werkzeughaltern nicht praktikabel und einsetzbar.

Aus der JP 2017 -26 131 A und der US 2010 / 0 096 032 A1 sind weitere, ähnlich aufgebaute Kupplungssysteme bekannt. Aus der DE 103 19 796 A1 ist ein hydraulischer oder pneumatischer Werkstück- oder Werkzeugspanner bekannt. Er ist der nächstliegende Stand der Technik.

Bei diesen Systemen wird für die einwandfreie Funktion vorausgesetzt, dass die beiden Kupplungsteile senkrecht und zentrisch zueinander, das bedeutet ohne Winkel- oder Positionsabweichungen, aufeinandergesetzt werden.

Der Erfindung liegt die Aufgabe zugrunde, eine Kupplungsvorrichtung für unter Druck stehende Fluide bereitzustellen. Mit Hilfe der Kupplungsvorrichtung sollen Werkzeughalter, die ein fluidisch betätigtes Spannsystem aufweisen, auf einfache, zuverlässige und platzsparende Weise temporär mit einem unter Druck stehenden Fluid versorgt werden.

Außerdem soll diese lösbare Kupplungsvorrichtung zwischen einer Fluidversorgung und einem Werkzeughalter oder/und einer Spindel einfach zu betätigen sein, platzsparend bauen und zuverlässig funktionieren. Weiterhin sollen auch geringe Winkel- und Positionsabweichungen zulässig sein, um zum Beispiel auch eine radiale Übertragung in rotationssymmetrischen Bauteilen, wie zum Beispiel Spindeln zu ermöglichen. Zudem soll die Kupplungsvorrichtung im ungekuppelten Zustand die Schnittstellen zuverlässig abdichten und die Leckage so gering wie möglich gehalten werden.

Es soll auch einen automatischen Werkzeugwechsel (zum Beispiel unter Zuhilfenahme eines Handhabungsroboters oder eines Roboterarms) an einem Werkzeughalter unterstützen, bzw. ermöglichen.

Diese Aufgabe wird erfindungsgemäß durch die Gegenstände der unabhängigen Ansprüche gelöst.

Die Kupplungsvorrichtung ist, wie üblich, zweiteilig ausgebildet. Das erste Kupplungsteil wird in der Regel in das Bauteil integriert, das mit Fluid versorgt werden soll. Das zweite Kupplungsteil ist dann auf der Versorgungsseite vorgesehen.

Um im Beispiel zu bleiben: Das erste Kupplungsteil kann in einem Werkzeughalter oder einer Spindel angeordnet sein. Das zweite Kupplungsteil kann in einen Versorgungsbügel integriert sein, der Teil einer Handhabungsvorrichtung oder einer Roboterhand ist.

Wenn in einem Werkzeughalter ein Werkzeugwechsel ansteht, dann fährt der Roboterarm den Versorgungsbügel in unmittelbare Nähe des Werkzeughalters und zwar so, dass das zweite Kupplungsteil im Versorgungsbügel und das erste Kupplungsteil im Werkzeughalter einander gegenüberliegend positioniert sind. Der Abstand beträgt wenige Millimeter. Um eine exaktere Vorpositionierung zu ermöglichen, können natürlich im Versorgungsbügel zusätzlich positionierende Anschläge oder Stifte integriert sein.

Wenn eine Spindel (z. B. eines angetriebenen Werkzeughalters) mit Fluid versorgt werden muss, dann kann alternativ das zweite Kupplungsteil in dem die Spindel umgebenden Gehäuse eingebaut sein. Die Fluidversorgung kann dann von der Werkzeugmaschine in das Gehäuse des angetriebenen Werkzeughalters erfolgen und von dort über das zweite Kupplungsteil in das erste Kupplungsteil der Spindel.

Es ist aber auch sinnvoll, das Gehäuse des angetriebenen Werkzeughalters über den beschriebenen Versorgungsbügel und zumindest einer ersten Kupplungsvorrichtung mit Fluid zu versorgen. Von dort kann das Fluid dann über im Inneren des Gehäuses vorhandene Fluid-Verbindungen und zumindest eine zweite Paarung (= Kupplungsvorrichtung) von zweitem und erstem Kupplungsteil in die Spindel zum Spannsystem gelangen.

Bei der Kupplungsvorrichtung sind sowohl das erste Kupplungsteil als auch das zweite Kupplungsteil sehr einfach aufgebaut und kompakt in den Abmessungen. Das erste Kupplungsteil ist letztendlich ein entsperrbares Rückschlagventil, dessen Ventilglied von außen zugänglich ist. Es wird in von dem nach außen öffnenden Ventilstößel des zweiten Kupplungsteils "automatisch" geöffnet, sobald der Aktuatorkolben des zweiten Kupplungsteils an dem ersten Kupplungsteil anliegt.

Das zweite Kupplungsteil sieht einen verschiebbaren Aktuatorkolben vor. Der Aktuatorkolben kann (hydraulisch, mechanisch oder elektrisch) einige Millimeter in Richtung des ersten Kupplungsteils bewegt werden. Der Aktuatorkolben ist eine unabhängige Bewegungsachse des zweiten Kupplungsteils, die es ermöglicht die Kupplungsvorrichtung zu schließen und anschließend wieder zu öffnen.

Der Aktuatorkolben weist ein Wegeventil mit einem nach außen öffnenden Ventilstößel auf. Der Ventilstößel des Wegeventils ist mit dem Aktuatorkolben verbunden bzw. gekoppelt. Der Ventilsitz des Wegeventils ist relativ zu dem Aktuatorkolben verschiebbar. Man könnte also sagen, dass das Wegeventil einen "nach innen öffnenden Ventilsitz" aufweist. Die Kombination des Aktuatorkolbens mit dem nach innen öffnenden Ventilsitz ermöglicht es, durch Verfahren des Aktuatorkolbens um wenige Millimeter, das Wegeventil des zweiten Kupplungsteils zu öffnen und mit der gleichen Bewegung das Rückschlagventil des ersten Kupplungsteils zu öffnen.

Sobald der Aktuatorkolben wieder zurückfährt (fluidisch oder über eine Feder), schließen sich das Wegeventil und das Rückschlagventil. Die beiden Teile der Kupplungsvorrichtung sind wieder fluiddicht zueinander und zur Umgebung geschlossen. Es kann kein Fluid in die Umgebung entweichen oder zwischen den Kupplungsteilen ausgetauscht werden.

Wenn also beispielsweise der oben erwähnte Versorgungsbügel von einer Roboterhand in eine Position gebracht wurde in der sich das zweite Kupplungsteil (im Versorgungsbügel) unmittelbar vor dem ersten Kupplungsteil des Werkzeughalters befindet und die beiden Kupplungsteile fluchtend zueinander ausgerichtet sind, jedoch sich noch nicht berühren, kann sich der Aktuatorkolben in Richtung des ersten Kupplungsteils bewegen.

Sobald der Aktuatorkolben auf dem Ventilgehäuse des ersten Kupplungsteils aufsetzt, ist eine fluiddichte Verbindung zwischen erstem Kupplungsteil und zweitem Kupplungsteil vorhanden. Darüber hinaus werden durch die Bewegung des Aktuatorkolbens das Rückschlagventil des ersten Kupplungsteils und das Wegeventil des zweiten Kupplungsteils geöffnet.

Das Rückschlagventil wird geöffnet, indem das Ventilglied im ersten Kupplungsteil nach innen von seinem Sitz abgehoben wird. Das Wegeventil wird geöffnet, indem der Ventilsitz von einem feststehenden Ventilstößel abgehoben wird.

Auch auf Seiten des zweiten Kupplungsteils wird nur ein Ventil, nämlich das nach außen öffnende Wegeventil benötigt. Durch diese sehr einfache Bauweise sind die Fertigungskosten relativ niedrig und vor allem der Bauraumbedarf ist gering.

Wenn man bedenkt, dass das zweite Kupplungsteil Teil eines Handhabungssystems, wie zum Beispiel einer Roboterhand ist, dann benötigt man für jede Werkzeugmaschine nur einen Versorgungsbügel mit einem (Zahlwort) zweiten Kupplungsteil (Zum Beispiel zur Ansteuerung von einfachwirkenden Zylindern) oder zwei (Zahlwort) zweiten Kupplungsteilen (zum Beispiel für die Ansteuerung von doppelwirkenden Zylindern).

Der Versorgungsbügel kann auch mehr als zwei zweite Kupplungsteile aufweisen, wenn der Werkzeughalter bzw. die Spindel über den Versorgungsbügel mit weiteren Fluiden versorgt wird. Zum Beispiel kann über ein zusätzliches zweites Kupplungsteil Druckluft bereitgestellt werden, um die Plananlage des Adapters an der Aufnahme zu kontrollieren, um den Spannvorgang zu überwachen oder final zu kontrollieren oder die Reinigung der Kontaktflächen zu ermöglichen.

Bei Bedarf können alle im Arbeitsraum des Handhabungsgeräts beziehungsweise der Roboterhand befindlichen Werkzeughalter angefahren werden. Die Kupplungsvorrichtung kann geschlossen werden und das Spannsystem im Werkzeughalter kann je nach Bedarf geöffnet oder gespannt werden. Bei gelöstem Spannsystem kann ein Adapter mit einem auszutauschenden Werkzeug aus der Aufnahme des Werkzeughalters entnommen und ein Adapter mit einem neuen Werkzeug in die Aufnahme eingesetzt werden. Zum Beispiel wird ein stumpfes Werkzeug ersetzt oder es wird ein Adapter mit einem Bohrer gegen einen Adapter mit einem Fräser ausgetauscht. Anschließend wird das Spannsystem in die Spannstellung bewegt und der Werkzeughalter ist wieder einsatzbereit. Dies kann auch, wie schon beschrieben, bei laufendem Zerspanungsbetrieb eines benachbarten Werkzeughalters erfolgen.

Die Kupplungsvorrichtung ist einfach aufgebaut und benötigt nur wenig Bauraum.

Erwähnenswert ist weiter, dass diese Kupplungsvorrichtung zum Spannen und Lösen eines Spannsystems in einem Werkzeughalter keinerlei Änderungen oder Eingriffe in die Werkzeugmaschine erfordert. Damit wird ein automatischer Werkzeugwechsel in Standardmaschinen/Werkzeugmaschinen möglich. Auch die Nachrüstung eines automatischen Werkzeugwechsels an einer vorhandenen Maschine ist möglich.

Diese Vorteile kommen daher, dass die Versorgung der fluidischen Spannsysteme der Werkzeughalter "außerhalb" der Werkzeugmaschine, beispielsweise über einen Handhabungsroboter erfolgt, der mit einem Versorgungsbügel mit einer in den Versorgungsbügel integrierten und unabhängig steuerbaren Bewegungsachse ausgestattet ist. Ein Eingriff in oder eine Änderung an der Werkzeugmaschine, welche die Werkzeughalter einsetzt, ist nicht erforderlich. Aber auch als Ergänzung der fluidischen Leitung durch die Maschine z.B. vom Gehäuse in die Spindel eines angetriebenen Werkzeugs, kann die Kupplungsvorrichtung verwendet werden.

Durch den (balligen/tonnenförmigen) Innenkonus oder die Innen-Kalotte zentriert sich der Aktuatorkolben und mit ihm das zweite Kupplungsteil auf dem Absatz des ersten Kupplungsteils. Diese Maßnahme erhöht die Zuverlässigkeit der Kupplungsvorrichtung sehr deutlich und ermöglicht den Einsatz auch unter den "rauen" Bedingungen in der Industrie.

Bei einer vorteilhaften Weiterbildung der Erfindung ist ein Spiel zwischen der Zylinderbohrung und dem Aktuatorkolben an einem dem ersten Kupplungsteil abgewandten Ende des Aktuatorkolbens kleiner als ein Spiel zwischen der Zylinderbohrung und dem Aktuatorkolben an seinem dem ersten Kupplungsteil zugewandten Ende. Dadurch kann der Aktuatorkolben sich etwas schrägstellen, wenn er sich mit dem Konus auf dem Absatz des ersten Kupplungsteils zentriert.

Bei einer bevorzugten Ausgestaltung mündet der Fluidraum des zweiten Kupplungsteils in eine Führungsbohrung, wobei ein hülsenförmiger Ventilsitz des Wegeventils in der Führungsbohrung verschiebbar aufgenommen ist, und wobei ein Ventilstößel des Wegeventils mit dem Aktuatorkolben verbunden ist und durch den hülsenförmigen Ventilsitz ragt.

Der Ventilstößel ist in bevorzugter Ausführungsform mit einem Ventilteller ausgebildet, der die Bewegung des beweglichen Ventilsitzes (zum Beispiel in Form eines eingepressten oder beweglichen Sitzrings) in der Führungsbohrung des Aktuatorkolbens nach außen begrenzt.

Optional kann der Ventilsitz noch über einen Anschlag des Ventilsitzes im Aktuatorkolben entlastet werden. Dies ist besonders wichtig, wenn Hydraulikdruck am zweiten Kupplungsteil vorhanden ist aber kein erstes Kupplungsteil als Gegenstück da ist z.B. bei falscher Positionierung des Versorgungsbügels.

Dies bedeutet, dass der Sitzring des Ventilsitzes fluidisch von dem unter Druck stehenden Fluid im Fluidraum des Aktuatorkolbens gegen den Ventilteller des Ventilstößels gepresst wird und abdichtet. Das Wegeventil ist dadurch geschlossen. Nur wenn das zweite Kupplungsteil auf dem ersten Kupplungsteil aufsitzt, sind beide Ventile (Wegeventil und Rückschlagventil) geöffnet.

Um sicherzustellen, dass unter allen Umständen der Ventilsitz gegen den Ventilteller des Ventilstößels gedrückt wird, auch wenn der Fluidraum drucklos ist, ist in vorteilhafter Weiterbildung eine zweite Druckfeder in dem Fluidraum angeordnet, welche den Sitzring des Ventilsitzes gegen den Ventilteller des Ventilstößels drückt.

Die Eingangs genannte Aufgabe wird auch bei einer Kupplungsvorrichtung für ein Fluid, umfassend ein erstes Kupplungsteil und ein mit dem ersten Kupplungsteil zusammenwirkendes zweites Kupplungsteil, wobei das erste Kupplungsteil als federbelastetes und entsperrbares Rückschlagventil ausgebildet ist, wobei das zweite Kupplungsteil einen in einem Gehäuse verschiebbar geführten Aktuatorkolben umfasst, wobei in dem Aktuatorkolben ein nach außen öffnendes Wegeventil angeordnet ist, dadurch gelöst, dass der Aktuatorkolben als Stufenkolben ausgebildet ist, dass ein erster Teil des Aktuatorkolbens den ersten Zylinderraum begrenzt, dass ein zweiter Teil des Aktuatorkolbens einen dritten Zylinderraum begrenzt, und dass ein Durchmesser D23.1 des ersten Teils kleiner ist als ein Durchmesser D23.2 des zweiten Teils des Aktuatorkolbens, so dass im dritten Zylinderraum eine Ringfläche entsteht.

In weiterer vorteilhafter Weiterbildung ist an einem dem ersten Kupplungsteil abgewandten Ende des Aktuatorkolbens eine erste Dichtung und an dem ersten Kupplungsteil zugewandten Ende des Aktuatorkolbens eine zweite Dichtung vorgesehen, wobei die zweite Dichtung in radialer Richtung so nachgiebig ist, dass sie den zweiten Zylinderraum auch dann abdichtet, wenn der Aktuatorkolben gegenüber der Zylinderbohrung schräggestellt oder versetzt ist. Dadurch ist gewährleistet, dass das zweite Kupplungsteil auch unter ungünstigen Bedingungen (schräggestellter Aktuatorkolben) gut abgedichtet ist.

In vorteilhafter Ausgestaltung der Erfindung ist in dem Aktuatorkolben ein Fluidraum ausgebildet, wobei der Fluidraum an einem Ende geschlossen ist und der Fluidraum über eine außen am Aktuator vorhandene Umfangsnut und mindestens eine Radialbohrung fluidisch mit einer Fluidversorgung über eine Versorgungsleitung beispielsweise in einem Gehäuse eines Versorgungsbügels verbunden ist. Über die Versorgungsleitung kann das Fluid (z. B. Hydrauliköl) von einem Fluidaggregat mit dem gewünschten Druck bereitgestellt werden.

Um den Aktuatorkolben in der Zylinderbohrung des Gehäuses gezielt hin und her bewegen zu können, ist vorgesehen, dass der Aktuatorkolben den Zylinder in einen ersten Zylinderraum und einen zweiten Zylinderraum unterteilt, dass der erste Zylinderraum über eine steuerbare erste Steuerleitung und der zweite Zylinderraum über eine steuerbare zweite Steuerleitung mit Fluid versorgt werden kann.

Je nachdem welche der Steuerleitungen mit unter Druck stehendem Fluid beaufschlagt wird, bewegt sich der Aktuatorkolben in der Zylinderbohrung hin und her. Dadurch ist es möglich durch Ansteuern beispielsweise einer der Steuerleitungen den Aktuatorkolben und mit ihm das Wegeventil in Richtung des ersten Kupplungsteils zu bewegen. Damit wird gezielt und ohne die Roboterhand zu bewegen, der Aktuatorkolben bewegt. Dadurch kann der vor Beginn des Kupplungsvorgangs vorhandene Abstand zwischen erstem und zweitem Kupplungsteil eliminiert werden und eine fluidische Verbindung zwischen erstem und zweiten Kupplungsteil hergestellt werden.

Durch den Aktuatorkolben, der den Fluidraum, die zweite Druckfeder, aber auch das nach außen öffnende Wegeventil aufnimmt, steht eine sehr kompakte vor allem in axialer Richtung sehr kurze Bauform zur Verfügung. Der Aktuatorkolben und das Wegeventil sind auch fertigungstechnisch einfach zu beherrschen, so dass sie mit relativ geringen Kosten und hoher Lebensdauer zur Verfügung gestellt werden können.

In dem Aktuatorkolben ist ein hülsenförmiger Ventilsitz geführt. Durch diesen Ventilsitz ragt ein Ventilstößel des Wegeventils, der mit dem Aktuatorkolben gekoppelt ist. Ein Ventilteller des Ventilstößels begrenzt den Weg des Ventilsitzes in der Führungsbohrung.

Besonders vorteilhaft ist es, wenn der Ventilsitz eine Hülse und einen in der Hülse aufgenommenen und geführten Sitzring sowie ein Federelement umfasst. Das Federelement stützt sich einenends gegen die Hülse und anderends gegen den Sitzring ab. Dadurch kann ein Winkelversatz zwischen dem ersten Kupplungsteil und dem zweiten Kupplungsteil ausgeglichen werden, ohne die Funktion der Kupplungsvorrichtung zu beeinträchtigen. Dieser Winkelausgleich erweitert den Einsatzbereich auf Anwendungen in den das erste Kupplungselement in einer drehbar gelagerten Spindel angeordnet ist. In der Praxis häufig auftretende Fehler bei der Positionierung der Spindel können dadurch egalisiert werden.

Bei der Kupplungsvorrichtung kann in dem Fluidraum eine zweite Druckfeder angeordnet sein, wobei eine von der zweiten Druckfeder auf den Ventilsitz ausgeübte Federkraft, den Ventilsitz gegen einen definierten Anschlag oder, wenn das Federelement eine höhere Federkraft als die zweite Druckfeder besitzt, gegen den Ventilteller des Ventilstößels drückt.

In vorteilhafter Ausgestaltung der Kupplungsvorrichtung umfasst das Rückschlagventil des ersten Kupplungsteils ein Ventilgehäuse, wobei an dem Ventilgehäuse eine mit dem Rückschlagventil in Verbindung stehende Öffnung für das Fluid ausgebildet ist, wobei die Öffnung in einem Absatz des Ventilgehäuses mündet und wobei bei geschlossener Kupplungsvorrichtung der Absatz in die Führungsbohrung des zweiten Kupplungsteils eintaucht.

Durch diese sehr einfache und robuste Lösung, bewirkt der Absatz des ersten Kupplungsteils ein Öffnen des Wegeventils im zweiten Kupplungsteil sobald sich der Aktuatorkolben des zweiten Kupplungsteils samt dem nach außen öffnenden Wegeventil in Kontaktrichtung des ersten Kupplungsteils beziehungsweise dessen Absatz bewegt.

Gleichzeitig drückt der Ventilstößel des zweiten Kupplungsteils gegen das Ventilglied und die erste Druckfeder des ersten Kupplungsteils und macht dadurch die Öffnung des Rückschlagventils frei, indem der Dichtring von dem Ventilgehäuse abhebt.

Alternativ können das Ventilgehäuse und die Stirnseite des Aktuatorkolbens als zentrierende Konuspaarung (Male-Female; Female - Male) ausgebildet sein.

Natürlich sind auch andere zentrierende Paarungen wie kalottenförmige Paarungen oder eine Kombination aus Konus und kalottenförmiger bzw. balliger Konuskontur möglich.

In vorteilhafter Weiterbildung ist der Fluidraum über eine außen am Aktuatorkolben vorhandene Umfangsnut und mindestens eine Radialbohrung mit einer Versorgungsleitung im Gehäuse fluidisch mindestens in der Offenstellung des Wegeventils verbunden und wird darüber mit Fluid versorgt.

"Offenstellung des Wegeventils" bedeutet, dass der Ventilteller nicht auf dem Ventilsitz aufliegt.

Optional kann der erste Zylinderraum über eine erste Steuerleitung mit Fluid versorgt werden. Der zweite Zylinderraum kann (ebenfalls optional) über eine zweite Steuerleitung mit Fluid versorgt werden.

Eine besonders vorteilhafte Ausführungsform des zweiten Kupplungsteils sieht vor, dass in dem zweiten Zylinderraum oder außerhalb des Gehäuses eine dritte Druckfeder angeordnet ist, deren auf den Aktuatorkolben wirkende Federkraft der Kraft eines in dem ersten Zylinderraum befindlichen Fluids entgegenwirkt.

Der Fluidraum kann über eine Versorgungsleitung oder eine kombinierte Steuer- und Versorgungsleitung mit Fluid versorgt werden. Bevorzugt werden der dritte Zylinderraum und der Fluidraum gleichzeitig über die Steuer- und Versorgungleitung mit Fluid versorgt. Das erlaubt eine sehr kompakte Bauweise und verringert den Herstellungsaufwand. Die Kupplungsvorrichtung weist in einer vorteilhaften Weiterbildung zwischen dem Fluidraum und dem Wegeventil eine Drossel oder eine Blende auf. Dadurch wird bei geöffnetem Wegeventil der Abfluss von unter Druck stehendem Fluid aus dem Fluidraum begrenzt, so dass im Fluidraum und im dritten Zylinderraum und ein gewisser Mindest-Überdruck aufrecht erhalten bleibt. In Folge dessen bleibt der Aktuatorkolben in seiner Offenstellung.

Die Drossel kann als Ringspalt zwischen dem Ventilstößel und dem Ventilsitz bzw. dessen Hülse ausgebildet sein.

Platz ist in dem Bearbeitungsraum eines Bearbeitungszentrums immer knapp. Allerdings benötigt das zweite Kupplungsteil einen gewissen Platz, um bei einem vorgegebenen Fluiddruck die erforderliche Stellkraft bereitzustellen. Einen Ausweg aus diesem Dilemma bietet eine Weiterbildung an, bei der mindestens der zweite Abschnitt des Aktuatorkolbens einen ovalen oder elliptischen Querschnitt hat, und bei der mindestens der zweite Abschnitt der Zylinderbohrung einen ovalen oder elliptischen Querschnitt hat. Dann wird bei gleicher Fläche des zweiten Abschnitts des Aktuatorkolbens die Baulänge des zweiten Kupplungsteils in einer Richtung verringert. Diese Verringerung ermöglicht in etlichen Anwendungen, den Einsatz der Kupplungsvorrichtung auch unter beengten Verhältnissen.

Vorteilhafte Bauformen des ersten Kupplungsteils betreffen dessen Rückschlagventil. Es umfasst ein Ventilgehäuse, wobei an dem Ventilgehäuse eine mit dem Rückschlagventil in hydraulischer Verbindung stehende Öffnung für das Fluid ausgebildet ist, wobei die Öffnung in dem Absatz des Ventilgehäuses ausgebildet ist, wobei bei geschlossener Kupplungsvorrichtung der Absatz in die Führungsbohrung des zweiten Kupplungsteils eintaucht und der Ventilsitz des Wegeventils von dem Ventilteller des Ventilstößels abhebt, und wobei eine Leitung (in dem Gehäuse oder einer Spindel vom Rückschlagventil freigegeben bzw. verschlossen wird.

Die Zentrierung zwischen erstem und zweitem Kupplungsteil wird weiter verbessert, wenn der Absatz des Ventilgehäuses kegelstumpfförmig oder kalottenförmig ausgebildet ist.

Die Kupplungsvorrichtung kann in verschiedenen Konstellationen eingesetzt werden. Bevorzugt ist es, wenn das zweite Kupplungsteil in einem Versorgungsbügel angeordnet ist. Der Versorgungsbügel umfasst dann ein Gehäuse mit einer Zylinderbohrung, die den Aktuatorkolben aufnimmt.

Wenn das Spannsystem in einem Werkzeughalter einen doppeltwirkenden Fluidzylinder vorsieht, dann sind zwei erste Kupplungsteile in dem Werkzeughalter integriert. Dann hat auch der Versorgungsbügel zwei zweite Kupplungsteile. Die zweiten Kupplungsteile sind dann so angeordnet, dass ohne Veränderung der Position des Versorgungsbügels jeweils ein zweites Kupplungsteil und ein erstes Kupplungsteil einander gegenüberliegend positioniert sind. Je nachdem ob das Spannsystem geöffnet oder geschlossen werden soll, dient eine der Kupplungen als Fluidzufuhr und die andere als Fluidableitung oder aber umgekehrt.

Wenn das Spannsystem in einem Werkzeughalter einen einfach wirkenden Fluidzylinder vorsieht, dann ist nur ein erstes Kupplungsteil in dem Werkzeughalter integriert. Dann benötigt auch der Versorgungsbügel nur ein zweites Kupplungsteil.

Es ist aber auch möglich, dass ein Versorgungsbügel, der mit zwei oder mehr zweiten Kupplungsteilen ausgerüstet ist, einen Werkzeughalter mit nur einem ersten Kupplungsteil zusammenwirkt. Dann wird ein zweites Kupplungsteil des Versorgungsbügels in geringem Abstand vor dem ersten Kupplungsteil des Werkzeughalters positioniert. Anschließen wird durch gezieltes Ansteuern des zu diesem zweiten Kupplungsteil gehörenden Aktuatorkolbens die Kupplungsvorrichtung geschlossen.

Der Erfindung kann in einem stehenden Werkzeughalter umfassend ein Gehäuse und mindestens eine in dem Gehäuse angeordnete Zentrieraufnahme für die Aufnahme eines Adapters und ein fluidisch betätigtes Spannsystem zum Spannen und Lösen des Adapters in der Zentrieraufnahme zum Einsatz kommen, indem an dem Gehäuse ein erstes Kupplungsteil vorhanden ist und dass das erste Kupplungsteil mit einem zweiten Kupplungsteil in einem Versorgungsbügel zusammenwirkt.

In entsprechender Weise kann die Kupplung auch bei einem angetriebenen Werkzeughalter umfassend ein Gehäuse, eine in dem Gehäuse gelagerte Spindel, mindestens eine in der Spindel angeordnete Zentrieraufnahme für einen Adapter und ein fluidisch betätigtes Spannsystem zum Spannen und Lösen des Adapters in der Zentrieraufnahme zum Einsatz kommen.

In bevorzugter Ausgestaltung ist vorgesehen, dass in der Spindel bevorzugt in einem Bund der Spindel, mindestens ein erstes Kupplungsteil vorgesehen ist.

In einer weiteren bevorzugten Ausgestaltung ist vorgesehen, dass mindestens eines der zweiten Kupplungsteile in dem die Spindel umgebenden Gehäuse eingebaut ist und über das Gehäuse und die anschließenden Bauteile (wie z.B. Bauteile der Werkzeugmaschine oder des Handlingsystems) mit Fluid versorgt wird.

Um die mechanische Belastung der Spindel durch das Anfahren des Aktuatorkolbens auf das Ventilgehäuse beziehungsweise der Ventilstößel auf die Ventilglieder zu minimieren, ist es vorteilhaft, dass vor allem bei doppeltwirkenden fluidischen Spannsystemen die beiden ersten Kupplungsteile in der Spindel einander gegenüberliegend also um 180° versetzt angeordnet sind. Wenn dann die zweiten Kupplungsteile gleichzeitig an die zwei ersten Kupplungsteile der Spindel anfahren, dann heben sich die radial auf die Spindel wirkenden Kräfte auf und die Lager der Spindel werden nur sehr gering belastet. Außerdem wird eine Durchbiegung der Spindel aufgrund einseitiger radial wirkender Kräfte unterbunden. Werden mehr als zwei Kupplungssysteme eingesetzt, wird die Anordnung und Beaufschlagung der Spindel mit den auf sie wirkenden Aktuatorkräften so gewählt, dass sich die resultierenden Kräfte weitgehend aufheben.

Bei einer besonders vorteilhaften Ausgestaltung des Versorgungsbügels umfassend zwei zweite Kupplungsteile, sind diese zweiten Kupplungsteile (nachfolgen als Nummer 1 und Nummer 2 bezeichnet) über Kreuz an die Fluid-Leitungen des Versorgungsbügels angeschlossen. Über Kreuz bedeutet z. B. bei einem zweiten Kupplungtsteil, das an eine Steuerleitung und eine kombinierte Steuer- und Versorgungsleitung angeschlossen ist, dass die Steuerleitung des zweiten Kupplungsteils Nummer 1 und die kombinierte Steuer- und Versorgungsleitung des zweiten Kupplungsteils Nummer 2 an die gleiche Fluid-Leitung angeschlossen sind, und dass die kombinierte Steuer- und Versorgungsleitung des zweiten Kupplungsteils Nummer 1 und die Steuerleitung des zweiten Kupplungsteils Nummer 2 an die gleiche Fluid-Leitung angeschlossen sind Das Ausfahren des Aktuatorkolbens kann über zwei hydraulisch voneinander getrennte Kolben des Aktuatorkolbens erfolgen, wobei einer dieser Kolben mit dem Fluidraum verbunden ist. Die Rückstellung in die nicht verbundene Stellung des Aktuatorkolbens kann über eine Feder erfolgen.

Durch diese Verschaltung "über Kreuz" ist es möglich mit zwei Fluid-Leitungen den Zylinderaufbau eines Werkzeughalters so anzusteuern,
- dass sich der Kolben und mit ihm die Kolbenstange in beide Richtungen bewegt,
- dass aufgrund der Bewegung des Kolbens das im Zylinderaufbau verdrängte Fluid abzuführen und
- die Volumenänderung des ersten Zylinderraums bzw. des dritten Zylinderraums in je einem der beiden zweiten Kupplungsteile zu kompensieren.

Weitere Vorteile und vorteilhafte Ausgestaltungen der Erfindung sind den nachfolgenden Zeichnungen, deren Beschreibungen und den Patentansprüchen entnehmbar.

Es zeigen:
- Figur 1: einen Schnitt durch ein Ausführungsbeispiel einer Kupplungsvorrichtung in geöffnetem Zustand,
- Figur 2: die gleiche Kupplungsvorrichtung in geschlossenem Zustand,
- Figur 3: einen Werkzeughalter und eine Roboterhand, die unter anderem mit einem Versorgungsbügel ausgerüstet ist,
- Figuren 4a und 4b: Ansichten von vorne auf die Zentrieraufnahme des Werkzeughalters gemäß Figur 3,
- Figur 5: einen Schnitt durch einen angetriebenen Werkzeughalter und eingebauter Spindel mit zwei Kupplungsvorrichtungen;
- Figur 6: einen Schnitt durch ein zweites Ausführungsbeispiel einer Kupplungsvorrichtung in geschlossenem Zustand;
- Figur 7: einen Schnitt durch ein drittes Ausführungsbeispiel einer Kupplungsvorrichtung;
- Figur 8: einen Schnitt durch das dritte Ausführungsbeispiel in geschlossenem Zustand;
- Figur 9: einen Schnitt durch das dritte Ausführungsbeispiel in offenem Zustand mit Versatz und Winkelfehler;
- Figur 10: einen Schnitt durch das dritte Ausführungsbeispiel in geschlossenen Zustand zur Veranschaulichung des Ausgleichs von Versatz und winkelfehlern;
- Figur 11: zwei Schnitte durch ein viertes Ausführungsbeispiel mit ovalem Aktuatorkolben;
- Figuren 12.1 und 12.2: die Integration des zweiten Ausführungsbeispiels in einen Werkzeughalter und deren Verschaltung in zwei Ansichten;
- Figuren 13.1 und 13.2: die Integration des zweiten Ausführungsbeispiels in einen Versorgungsbügel und deren Verschaltung in zwei Ansichten; sowie
- Figuren 14.1 bis 14.3: die Übergabe von Fluid in den Zylinderaufbau eines Werkzeughalters.

### Beschreibung der Ausführungsbeispiele

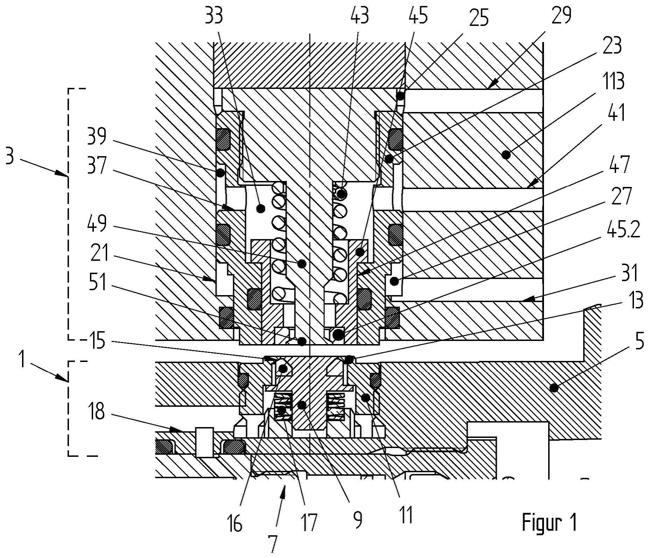

In der Figur 1 ist eine Kupplungsvorrichtung in geöffnetem Zustand dargestellt. Die Kupplungsvorrichtung umfasst ein erstes Kupplungsteil 1 und ein zweites Kupplungsteil 3. Im unteren Teil der Figur 1 befindet sich das erste Kupplungsteil 1 und im oberen Teil der Figur 1 ist das zweite Kupplungsteil 3 dargestellt. Wie bereits in der Beschreibungseinleitung mehrfach erläutert, ist die Kupplungsvorrichtung in vielen verschiedenen Konstellationen einsetzbar.

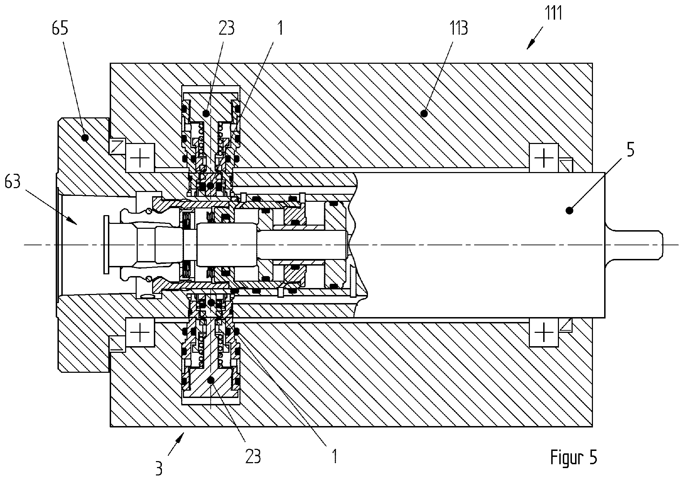

In der Figur 1 ist das erste Kupplungsteil 1 in einer Spindel 5 eines Werkzeughalters integriert, wie sie in der Figur 5 detaillierter dargestellt ist. In der Figur 1 ist nur ein kleiner Ausschnitt aus der Spindel 5 dargestellt, um die konstruktiven Besonderheiten des ersten Kupplungsteils 1 und des zweiten Kupplungsteils 3 gut erkennen zu können.

Das erste Kupplungsteil 1 umfasst ein Rückschlagventil 7, dessen Ventilglied 9 in einem Ventilgehäuse 11 gehalten und geführt ist. Das Ventilgehäuse 11 wird in die Spindel 5 mittels eines Gewindes eingeschraubt. Alternativ kann das Rückschlagventil 7 auch eingepresst oder eingerastet werden.

An dem in der Figur 1 oberen Ende des Ventilgehäuses 11 ist ein Absatz 13 mit einer in diesem Zustand geschlossenen Öffnung 15 ausgebildet. An dem Ventilglied 9 ist bei diesem Ausführungsbeispiel ein Dichtring 16 angeordnet, der zusammen mit einem Kegelventilsitz (ohne Bezugszeichen) des Ventilgehäuses 11 zusammenwirkt. Das Ventilglied 9 wird von einer als Tellerfederpaket ausgeführten ersten Druckfeder 17 gegen den Ventilsitz gedrückt, so dass das Rückschlagventil 7 in der in Figur 1 dargestellten Position geschlossen ist.

Im oberen Teil der Figur 1 ist das zweite Kupplungsteil 3 dargestellt. Es ist beispielsweise in ein Gehäuse 113 eines Werkzeughalters 111 integriert. In dem Gehäuse 113 ist eine Zylinderbohrung 21 vorhanden. In der Zylinderbohrung 21 ist ein Aktuatorkolben 23 dichtend aber verschiebbar geführt.

Der Aktuatorkolben 23 teilt die Zylinderbohrung 21 in einen ersten Zylinderraum 25 und einen zweiten Zylinderraum 27. In den ersten Zylinderraum 25 mündet eine erste Steuerleitung 29. Wenn in dieser ersten Steuerleitung 29 unter Druck stehendes Fluid ansteht, vergrößert sich das Volumen des ersten Zylinderraums 25 und der Aktuatorkolben 23 bewegt sich in der Figur 1 nach unten bis er an der Planfläche (ohne Bezugszeichen) des ersten Kupplungsteils 1 oder, wenn dieses erste Kupplungsteil 1 nicht als Kupplungspartner vorhanden ist (z.B. weil die Spindel 5 in einer falschen rotativen Position ist), einem Absatz (ohne Bezugszeichen) der Zylinderbohrung 21 aufliegt. Dann hat er seine untere Endstellung erreicht. Dabei wird Fluid über die zweite Steuerleitung 31 aus dem zweiten Zylinderraum 27 abgeführt.

Um den Aktuatorkolben 23 von der unteren Endstellung wieder in die in Figur 1 dargestellte obere Endstellung zu bringen, wird in entsprechender Weise unter Druck stehendes Fluid über die zweite Steuerleitung 31 in den zweiten Zylinderraum 27 geleitet. Gleichzeitig wird Fluid über die erste Steuerleitung 29 aus dem ersten Zylinderraum 25 abgeführt.

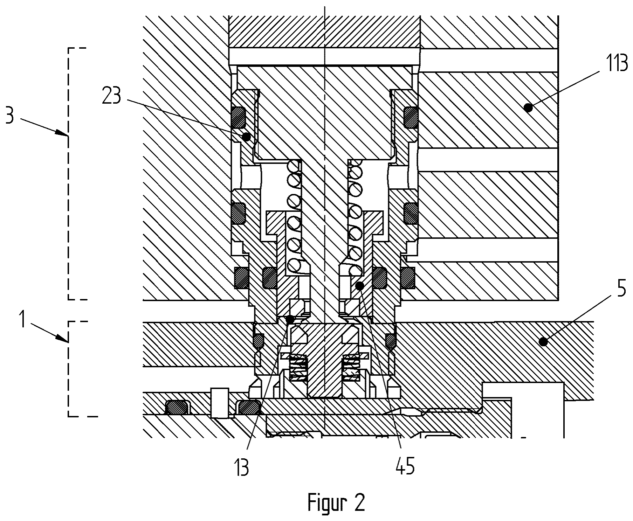

Im Inneren des Aktuatorkolbens 23 ist ein Fluidraum 33 ausgebildet. Dieser Fluidraum 33 ist in sich abgeschlossen. Lediglich über Radialbohrungen 37 und eine außen am Aktuatorkolben 23 angeordnete Umfangsnut 39 kann der Fluidraum 33 mit Fluid versorgt werden. Die Umfangsnut 39 ist bei diesem Ausführungsbeispiel so positioniert und bemessen, dass unabhängig von der Position des Aktuatorkolbens 23 in der Zylinderbohrung 21 immer eine Fluidverbindung zwischen einer Versorgungsleitung 41 im Gehäuse 19 und der Umfangsnut 39 besteht. Es ist aber ausreichend und sogar besonders vorteilhaft, wenn diese Fluidverbindung nur besteht, wenn sich der Aktuatorkolben 23 in der (in Figur 2) unteren Endposition befindet. Dann nämlich ist die Kupplungsvorrichtung geschlossen.

In dem Fluidraum 33 ist eine zweite Druckfeder 43 eingespannt, welche einen hülsenförmigen Ventilsitz 45 in Richtung des ersten Kupplungsteils 1 beziehungsweise in Richtung des Ventiltellers 51 des Ventilstößels 49 drückt (in Figur 1 nach unten).

Der hülsenförmige Ventilsitz 45 ist in einer Führungsbohrung 47 im Aktuatorkolben 23 verschiebbar und dichtend geführt. Er weist, wie auch der Ventilsitz des Rückschlagventils 7, einen Sitzring 45.2, bevorzugt aus Kunststoff oder Gummi, auf.

Ein Ventilstößel 49 des Wegeventils ist fest mit dem Aktuatorkolben 23 verbunden. Der Ventilstößel 49 hat einen relativ langen und dünnen zylindrischen Schaft an dessen unterem Ende der bereits erwähnte Ventilteller 51 ausgebildet ist.

In der in Figur 1 dargestellten Position befindet sich der Ventilsitz 45 in seiner Schließstellung, das heißt die zweite Druckfeder 43 drückt den Ventilsitz 45 mit dem Sitzring 45.2 gegen den Ventilteller 51 des Ventilstößels 49. In dieser Position des Ventilsitzes 45 kann kein Fluid aus der Versorgungsleitung 41 durch den Fluidraum 33 in Richtung des ersten Kupplungsteils 1 strömen. Das Wegeventil im Aktuatorkolben 23 ist geschlossen.

Wenn nun über die erste Steuerleitung 29 der erste Zylinderraum 25 mit unter Druck stehendem Fluid versorgt wird, bewegt sich der Aktuatorkolben 23 in der Figur 1 nach unten, wie dies in der Figur 2 dargestellt ist. Aus Gründen der Übersichtlichkeit sind in der Figur 2 nur wenige Bezugszeichen eingezeichnet.

Es ist zu erkennen, dass der Ventilstößel 49 die Bewegung des Aktuatorkolbens 23 mitmacht, weil er mit dem Aktuatorkolben 23 verbunden ist. Sobald der Aktuatorkolben 23 sich etwas nach unten bewegt hat, gelangt der Ventilsitz 45 in Anlage an den Absatz 13 des ersten Kupplungsteils 1.

Durch den Absatz 13 kann der Ventilsitz 45 nicht weiter der Bewegung des Aktuatorkolbens 23 folgen. Die zweite Druckfeder 43 wird zusammengedrückt und der Ventilsitz 45 hebt vom Ventilteller 51 des Ventilstößels 49 ab. Infolgedessen ist das Wegeventil im zweiten Kupplungsteil 3 geöffnet.

Gleichzeitig sorgt aber der Ventilstößel 49 des Wegeventils dafür, dass auch das Rückschlagventil 7 im ersten Kupplungsteil 1 geöffnet wird. Dies geschieht, indem der mit dem Aktuatorkolben 23 verbundene Ventilstößel 49 des zweiten Kupplungsteils 3 das bewegliche Ventilglied 9 des Rückschlagventils 7 im ersten Kupplungsteil 1 gegen die Kraft der ersten Druckfeder 17 (in der Figur 2) nach unten drückt und somit öffnet.

Damit ist eine Fluidverbindung zwischen dem ersten Kupplungsteil 1 und dem zweiten Kupplungsteil 3 hergestellt.

Wie man aus der Figur 2 gut erkennen kann, ist nur ein minimales Leckagevolumen zwischen dem Absatz 13 des ersten Kupplungsteils 1 und der Führungsbohrung 47 im Aktuatorkolben 23 vorhanden. Die daraus möglicherweise resultierende Leckagemenge ist sehr gering.

Wenn die Kupplungsvorrichtung wieder geöffnet werden soll, wird die zweite Steuerleitung 31 mit unter Druck stehendem Fluid beaufschlagt. Infolgedessen bewegt sich der Aktuatorkolben 23 in der Zylinderbohrung 21 nach oben. Mit ihm bewegt sich der Ventilstößel 49 des zweiten Kupplungsteils 3 ebenfalls nach oben. In Folge dessen wird das Ventilglied 9 des Rückschlagventils 7 von der ersten Druckfeder 17 nach oben gegen den Ventilsitz bewegt und somit geschlossen.

In entsprechender Weise bewegt sich auch der Ventilsitz 45 des zweiten Kupplungsteils 3 relativ zu dem Aktuatorkolben 23 (nach unten in den Figuren 1 und 2) und verschließt das Wegeventil im zweiten Kupplungsteil 3.

Die Figuren 1 und 2 verdeutlichen die Funktion des Aktuatorkolbens 23 als unabhängige Bewegungsachse zum Schließen und Öffnen der Kupplungsvorrichtung. Der Aktuatorkolben 23 kann auch elektrisch, magnetisch oder elektromechanisch betätigt werden.

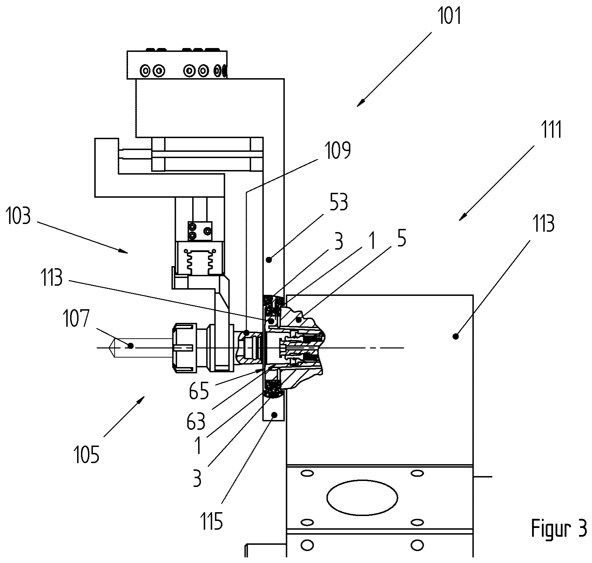

Nachfolgend werden anhand der Figuren 3 bis 5 verschiedene Konfigurationen dargestellt, um exemplarisch zu erläutern, wie vielfältig die Kupplungsvorrichtung einsetzbar ist.

In der Figur 3 ist eine Roboterhand 101 dargestellt, die an einem nicht dargestellten Industrieroboter angebracht werden kann. Diese Roboterhand 101 umfasst mehrere Baugruppen, von denen vor allem ein Versorgungsbügel 53 von Interesse ist.

An der Roboterhand 101 ist ein bewegbarer Greifer 103 angebracht, der in Figur 3 einen Adapter 105 mit einem Schneidwerkzeug 107 (hier als Bohrer dargestellt) und einem Hohlschaft 109 hält. Dieser Adapter 105 ist nur beispielhaft dargestellt. Die Erfindung ist nicht auf diese Art von Adaptern 105 beschränkt.

Der Greifer 103 dient dazu, den Adapter 105 in eine freigeschnitten dargestellte Zentrieraufnahme 63 eines Werkzeughalters 111 einzusetzen, bzw. bei Bedarf zu entnehmen. Die Fluidübergabe zwischen Versorgungsbügel 53 und dem, Werkzeughalter 111 muss dazu nicht gelöst werden.

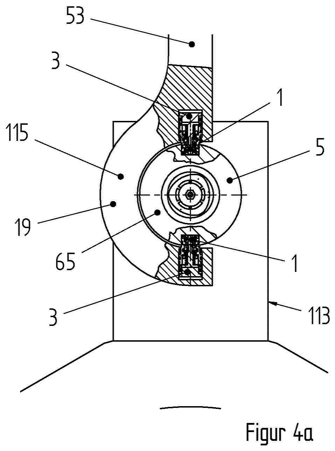

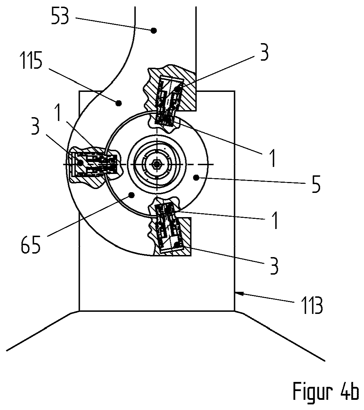

Wenn es sich um einen angetriebenen Werkzeughalter 111 handelt, befindet sich die Zentrieraufnahme 63 in einer drehbar gelagerten Spindel 5 (siehe die Figuren 4 und 5). Bei einem feststehenden Werkzeughalter befindet sich die Zentrieraufnahme 63 in einem Gehäuse 113 des Werkzeughalters 111.

Damit der Greifer 103 den Adapter 105 in die Zentrieraufnahme 63 einsetzen, bzw. bei Bedarf entnehmen kann, muss das fluidbetätigte Spannsystem in der Spindel 5 des Werkzeughalters 111 betätigt werden. Das in der Figur 3 nur angedeutete Spannsystem umfasst mehrere Spannsegmente, die um einen Zugbolzen herum angeordnet sind. Durch Verschieben des Zugbolzens in axialer Richtung relativ zu der Spindel 5 wird das Spannsystem geöffnet und gespannt. Die Bewegungen des Zugbolzens und die zum Spannen des Spannsystems erforderliche Betätigungskraft wird von den oben erwähnten fluidbetätigten einfach oder doppeltwirkenden Zylinderaufbauten bereitgestellt.

Die Versorgung des Spannsystems bzw. des Zylinderaufbaus mit unter Druck stehendem Fluid (und ggf. auch das Abführen von Fluid aus einem Druckraum des Zylinderaufbaus) geschieht mit Hilfe des Versorgungsbügels 53.

In der Figur 3 sind der Andockabschnitt 115 des Versorgungsbügels 53 und die Spindel 5 teilweise freigeschnitten dargestellt, so dass zwei zweite Kupplungsteile 3 und zwei erste Kupplungsteile 1 sichtbar sind.

Ohne auf die konstruktiven Details der Spindel 5 einzugehen, soll nur darauf hingewiesen werden, dass die Spindel 5 bei diesem Ausführungsbeispiel an ihrem vorderen Ende einen Bund 65 aufweist. In dem Bund 65 sind einander gegenüberliegend zwei erste Kupplungsteile 1 angeordnet.

In den Figuren 4a und 4b sind zwei Varianten des Versorgungsbügels 53 in einer Seitenansicht dargestellt. Der Versorgungsbügel 53 gemäß Figur 4a umfasst einen in etwa halbkreisförmigen oder C-förmigen Andockabschnitt 115 mit zwei zweiten Kupplungsteilen 3.

Der Versorgungsbügel 53 gemäß Figur 4b umfasst einen in etwa halbkreisförmigen oder C-förmigen Andockabschnitt 115 mit drei zweiten Kupplungsteilen 3.

Dementsprechend sind in der Spindel 5 bzw. dem Gehäuse 113 eines feststehenden Werkzeughalters 111 zwei oder drei erste Kupplungsteile 1 vorgesehen.

In den Figuren 4a und 4b ist nun die gleiche Situation wie in Figur 3 nur aus einer anderen Blickrichtung auf die Spindel 5 mit ihrer Zentrieraufnahme 63 und den Andockabschnitt 115 des Versorgungsbügels 53 dargestellt.

In den Figuren 4a und 4b ist gut zu erkennen, dass der Andockabschnitt 115 den Bund 65 umgibt und jeweils einem ersten Kupplungsteil 1 im Bund 65 ein zweites Kupplungsteil 3 im Andockabschnitt 115 gegenüberliegend angeordnet ist.

Wenn die zwei (Figur 4a) oder drei (Figur 4b) Kupplungsvorrichtungen offen sind, dann befinden sich die Aktuatorkolben 23 der zweiten Kupplungsteile 3 in der in Figur 1 dargestellten Position.

Wenn die zwei (Figur 4a) oder drei (Figur 4b) Kupplungsvorrichtungen geschlossen sind, dann befinden sich die Aktuatorkolben 23 der zweiten Kupplungsteile 3 in der in Figur 2 dargestellten Position.

Durch gezieltes Ansteuern eines oder mehrere der Aktuatorkolben 23 können eine oder mehrere der Kupplungsvorrichtungen unabhängig voneinander geschlossen oder geöffnet werden. Das geschieht durch die gezielte und individuelle Ansteuerung der Aktuatorkolben 23 der zweiten Kupplungsteile 3. Der Versorgungsbügel 53, bzw. der Andockabschnitt 115 ändern dabei ihre Position nicht. Währenddessen kann der Greifer 103 der Roboterhand 101 den Adapter 105 in die Zentrieraufnahme 63 einführen oder aus ihr entnehmen.

Dadurch wird ein automatischer Wechsel eines Adapters 105 mit gleichzeitigem Lösen und Spannen eines fluidbetätigten Spansystems in der Spindel 5 möglich.

In dem C-förmigen Andockabschnitt 115 des Versorgungsbügels 53 sind dementsprechend einander gegenüberliegend zwei zweite Kupplungsteile 3 angeordnet. Wenn die Roboterhand 101 den Versorgungsbügel 53 so relativ zu der Spindel 5 positioniert, dass die ersten Kupplungsteile 1 der Spindel 5 und die zweiten Kupplungsteile 3 des Versorgungsbügels 53 einander gegenüberliegen, dann kann die Kupplungsvorrichtung in der anhand der Figur 2 beschriebenen Weise geschlossen werden, indem die Aktuatorkolben 23 beider zweiten Kupplungsteile 3 radial nach innen in Richtung der ersten Kupplungsteile 1 gefahren werden.

In der Figur 4a sind zwei einander gegenüberliegende zweite Kupplungsteile 3 gemäß der Figuren 1 und 2 untergebracht. Dadurch heben sich die von den zweiten Kupplungsteilen 3 bzw. deren Aktuatorkolben 23 bei geschlossener Kupplungsvorrichtung auf die Spindel 5 ausgeübten Radialkräfte auf. Die Lagerung der Spindel 5 wird nicht belastet.

In der Figur 4b sind drei einander gegenüberliegende zweite Kupplungsteile 3 gemäß der Figuren 1 und 2 untergebracht. Bei diesem Ausführungsbeispiel sind die drei Kupplungsvorrichtungen so angeordnet, dass die resultierende Kraft aus den Aktuatorkolben einen vollständigen oder nahezu vollständigen Ausgleich der auf die Spindel 5 wirkenden Radialkräfte ermöglicht.

In der Figur 5 ist ein weiteres Ausführungsbeispiel einer Anwendung der Kupplungsvorrichtung dargestellt. Sie zeigt ebenfalls eine Spindel 5 mit einer Zentrieraufnahme 63 im Schnitt. Die ersten Kupplungsteile 1 sind nicht in dem Bund 65, sondern zwischen den Lagern der Spindel 5 in der Spindel angeordnet.

Bei diesem Ausführungsbeispiel sind zwei zweite Kupplungsteile 3 jeweils mit einem separat ansteuerbaren Aktuatorkolben 23 im Gehäuse 113 zwischen den Lagern angeordnet. Auch hier sind die Aktuatorkolben 23 so positioniert, dass sie das zugehörige Rückschlagventil 7 im ersten Kupplungsteil 1 in der Spindel 5 öffnen, wenn der Aktuatorkolben 23 das Wegeventil im zweiten Kupplungsteil 3 öffnet.

Selbstverständlich sind die anhand der Figuren 3 bis 5 dargestellten Beispiele nicht abschließend, sondern sollen nur exemplarisch erläutern, wie die ersten Kupplungsteile 1 und die zweiten Kupplungsteile 3 relativ zueinander positioniert werden müssen, um die Kupplungsvorrichtung durch Betätigen des Aktuatorkolbens 23 schließen beziehungsweise öffnen zu können.

Auch eine Kombination aus Figur 4a, 4b und Figur 5 ist möglich und sinnvoll. Dabei würde das Fluid über eine Ausführung nach Figur 4a oder 4b in den Werkzeughalter 111 geleitet und dann über die Ausführung nach Figur 5 vom Gehäuse 113 in die Spindel.

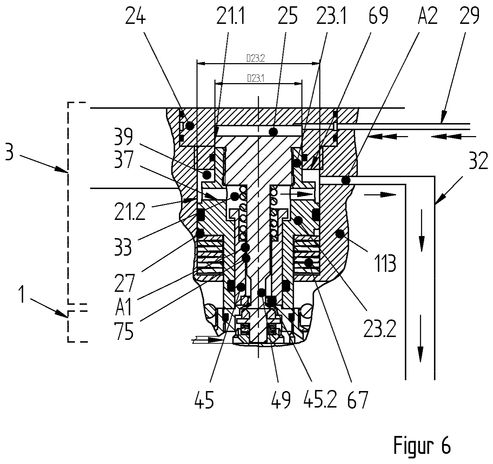

In der Figur 6 ist ein zweites Ausführungsbeispiel eines zweiten Kupplungsteils 3 dargestellt. Gleiche Bauteile werden bei den verschiedenen Ausführungsbeispielen mit den gleichen Bezugszeichen versehen. Im Folgenden werden die Begriffe "oben" und "unten" bei der Beschreibung des zweiten Kupplungsteils 3 gebraucht. Dabei ist "unten" dort wo sich das erste Kupplungsteil 1 befindet.

Das zweite Ausführungsbeispiel benötigt nur eine Steuerleitung 29 und eine kombinierte Steuer- und Versorgungsleitung 32; eine gesonderte Versorgungsleitung (41 in Figur 1) ist - anders als beim ersten Ausführungsbeispiel - nicht erforderlich.

Nachfolgend werden die Unterschiede zum ersten Ausführungsbeispiel erläutert und ansonsten auf die Beschreibung des ersten Ausführungsbeispiels Bezug genommen.

Der Aktuatorkolben 23 ist als Stufenkolben ausgebildet. Dementsprechend ist auch die Zylinderbohrung 21 als Stufenbohrung ausgeführt. Ein oberer Teil 23.1 des Aktuatorkolbens 23 mit einem Durchmesser D23.1 ist in einem Abschnitt 21.1 der Zylinderbohrung 21 dichtend geführt. Dieser Abschnitt 21.1 ist als Sackbohrung in einem in das Gehäuse 19 eingeschraubten Deckel 24 ausgebildet.

Ein unterer Teil 23.2 des Aktuatorkolbens 23 mit einem Durchmesser D23.2 ist in einem Abschnitt 21.2 der Zylinderbohrung 21 dichtend geführt. Dieser Abschnitt 21.2 ist in dem Gehäuse 19 ausgebildet.

Der Durchmesser D23.2 des "unteren Teils ist größer als der Durchmesser des D23.1 des "oberen Teils (D23.2 > D23.1).

Das bedeutet, dass der untere Teil 23.2, der sich unterhalb des Deckels 24 befindet, eine Ringfläche 69 aufweist, deren projizierte hydraulisch wirksame Fläche A69 gleich der Differenz der Kreisflächen A23.2 des unteren Teils 23.2 des Aktuatorkolbens 23 und A23.1 des oberen Teils 23.1 des Aktuatorkolbens 23 ist.

Der von dem zweiten Teil 23.2 des Aktuatorkolbens 23 und der Ringfläche 69 begrenzte Raum wird auch als dritter Zylinderraum " 39 bezeichnet.

Es ist konstruktiv möglich, dass die Fläche A23.1 des oberen Teils 23.1 des Aktuatorkolbens 23 gleich der Ringfläche 69 ist.

Dadurch hat die Umfangsnut 39 bei diesem Ausführungsbeispiel die Funktion eines dritten Zylinderraums 39; sie wird manchmal auch so bezeichnet.

Der stufenförmige Aufbau des Aktuatorkolbens 23 hat folgende Effekte:
1) Wenn in der ersten Steuerleitung 29 ein Druck anliegt dann übt das im ersten Zylinderraum 25 unter Druck stehende Fluid auf den Aktuatorkolben 23 eine hydraulische Kraft, die ihn gegen die Kraft der Tellerfedern 67 nach unten bewegt (in die in Figur 6 dargestellte Position) und es besteht eine Fluidverbindung zwischen erstem Kupplungsteil 1 und zweitem Kupplungsteil 3. Fluid kann dann zum Beispiel vom ersten Kupplungsteil 1 über den Fluidraum 33, die Radialbohrung(en) 37 und den dritten Zylinderraum 39 durch die kombinierte Steuer- und Versorgungsleitung 32 druckfrei abfließen.
2) Wenn in der Steuer- und Versorgungsleitung 32 ein Druck anliegt, dann übt das im dritten Zylinderraum 39 unter Druck stehende Fluid auf den Aktuatorkolben 23 eine hydraulische Kraft, die ihn ebenfalls gegen die Kraft der Tellerfedern 67 nach unten bewegt (in die in Figur 6 dargestellte Position) und es besteht eine Fluidverbindung zwischen erstem Kupplungsteil 1 und zweitem Kupplungsteil 3. Fluid kann dann zum Beispiel über die Radialbohrung(en) 37 in den Fluidraum 33 gelangen und von dort in das erste Kupplungsteil geleitet werden.
3) Wenn an der Steuerleitung 29 und der Steuer- und Versorgungsleitung 32 Druck anliegt, dann addieren sich die Kräfte aus den beiden Zylinderräumen und das unter Druck stehende Fluid übt auf den Aktuatorkolben 23 eine hydraulische Kraft aus, die ihn gegen die Kraft der Tellerfedern 67 nach unten bewegt (in die in Figur 6 dargestellte Position) und es besteht eine Fluidverbindung zwischen erstem Kupplungsteil 1 und zweitem Kupplungsteil 3.

Anders ausgedrückt reicht es also, wenn in einem der Zylinderräume 25, 39 Druck ansteht, um den Aktuatorkolben 23 auszufahren.

Wenn die die Fläche A23.1 des oberen Teils 23.1 des Aktuatorkolbens 23 gleich der Ringfläche 69 ist, dann sind - gleiche Druckverhältnisse vorausgesetzt - in beiden Fällen die auf den Aktuatorkolben 23 wirkenden Fluidkräfte gleich groß und gleichgerichtet!

Beim ersten Ausführungsbeispiel ist ein Fluidanschluss für den zweiten Zylinderraum 27 vorgesehen. Bei dem zweiten und dritten Ausführungsbeispiel sind in dem zweiten Zylinderraum 27 Tellerfedern 67 vorhanden, die bei druckloser Steuerleitung 29 bzw. der Steuer- und Versorgungsleitung 32, den Aktuatorkolben 23 in eine definierte Position, nämlich nach oben bewegen, so dass das Wegeventil geschlossen ist. Es ist auch möglich, zusätzlich zu den Tellerfedern 67 den zweiten Zylinderraum 27 über eine weitere Steuerleitung (nicht dargestellt) zumindest zeitweise mit unter Druck stehendem Fluid zu versorgen.

Zwischen dem Innendurchmesser des hülsenförmigen Ventilsitzes 45 und dem Außendurchmesser des Schafts des Ventilstößels 49 ist ein zylinderringförmiger Spalt 75 vorhanden, dessen Fläche mit A1 bezeichnet ist. Durch diesen Spalt strömt bei geöffnetem Wegeventil das Fluid vom Fluidraum 33 zum ersten Kupplungsteil 1 oder vom ersten 10 Kupplungsteil 1 zu Fluidraum 33.

Die Fläche A1 ist kleiner als eine Querschnittsfläche A2 der Steuer- und Versorgungsleitung 32, die den Fluidraum 33 mit Fluid versorgt, bzw. Fluid aus im abführt. Dadurch hat der Spalt zwischen dem Innendurchmesser des Ventilsitzes 45 und dem Außendurchmesser des Schafts des Ventilstößels 49 die Funktion einer Blende bzw. einer Drossel 75. Er begrenzt den Abfluss von Fluid aus dem Fluidraum 33 durch das geöffnete Wegeventil und hält den Druck im Fluidraum 33 auf einem so hohen Niveau, dass die Kupplungsvorrichtung geschlossen und damit der Aktuatorkolben 23 in der "Offenstellung" bleibt.

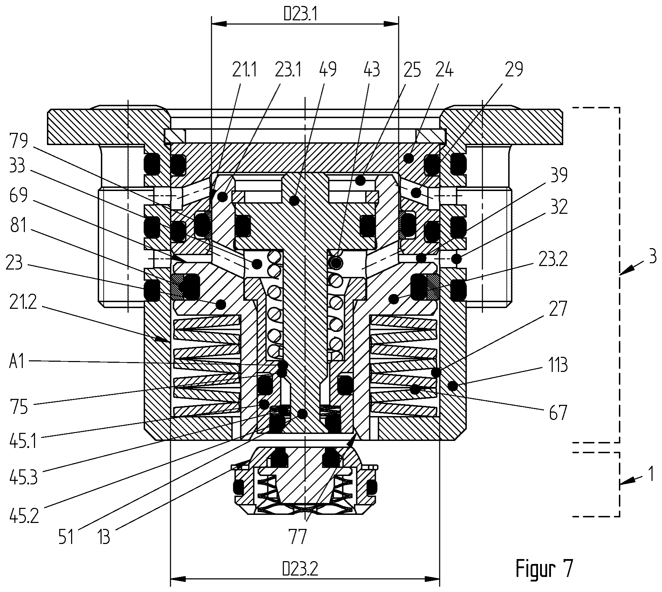

In der Figur 7 ist ein drittes Ausführungsbeispiel eines zweiten Kupplungsteils 3 dargestellt.

Das dritte Ausführungsbeispiel benötigt ebenfalls nur eine Steuerleitung 29, und eine kombinierte Steuer- und Versorgungsleitung 32; eine gesonderte Versorgungsleitung 41 ist nicht erforderlich.

Der Aufbau und die hydraulischen Eigenschaften des dritten Ausführungsbeispiels entsprechen denen des zweiten Ausführungsbeispiels. Daher werden, um Wiederholungen zu vermeiden, nachfolgend vor allem die Unterschiede zu dem in der Figur 6 dargestellten zweiten Ausführungsbeispiel erläutert.

Bei dem dritten Ausführungsbeispiel ist an einem dem ersten Kupplungsteil 1 zugewandten Ende 75 des Aktuatorkolbens 23 ein Konus 77 vorgesehen. Dieser Konus 77 kann auch als balliger Konus oder kalottenförmig ausgestaltet sein. Das erste Kupplungsteil 1 weist einen kalottenförmigen oder kegelstumpfförmigen Absatz 13 auf.

Wenn der Aktuatorkolben 23 in Richtung des ersten Kupplungsteils 1 ausfährt, dann zentriert der Konus 77 den Aktuatorkolben 23 auf dem Absatz 13. Auf diese Weise kann ein Versatz von erstem Kupplungsteil 1 und zweitem Kupplungsteil 3 ausgeglichen werden. Ein solcher Versatz von zum Beispiel 0,5 Millimeter oder einem Millimeter (1 mm) kann durch eine Positionierungenauigkeit einer Roboterhand entstehen, die das zweite Kupplungsteil 3 führt.

Um ein Verkippen oder Verschwenken des Aktuatorkolbens 23 um wenige Winkelgrad (zum Beispiel um bis zu 3°) zu ermöglichen, ist es optional möglich, dass das Spiel zwischen dem Aktuatorkolben 23 im Bereich des ersten Abschnitts 21.1 der Zylinderbohrung 21 kleiner ist als das Spiel zwischen dem Aktuatorkolben 23 im Bereich des zweiten Abschnitts 21.2 der Zylinderbohrung 21.

Im Bereich des ersten Abschnitts 21.1 der Zylinderbohrung 21 ist eine Dichtung 79 in einer Nut des Deckels 24 angeordnet. Im Bereich des zweiten Abschnitts 21.2 der Zylinderbohrung 21 ist eine Dichtung 81 in einer Nut des Aktuatorkolbens 23 angeordnet. Die Dichtung 81 ist so ausgeführt, dass sie auch bei einer Schrägstellung des Aktuatorkolbens 23 und/oder einem axialen Versatz des Aktuatorkolbens 23 relativ zu der Zylinderbohrung 21 den dritten Zylinderraum 39 gegen den zweiten Zylinderraum 27 abdichtet.

Dadurch können Winkel- und Positionsfehler zwischen erstem Kupplungsstück 1 und zweitem Kupplungsstück 3 von beispielsweise bis zu 3° oder 1mm ausgeglichen werden.

Um die beiden Kupplungstücke 1 und 3 bei einem Winkel- oder Positionsversatz optimal abdichten zu können, kann der Ventilsitz 45 mehrteilig ausgeführt werden. Er umfasst bei dem in der Figur 7 dargestellten Ausführungsbeispiel eine Sitzring 45.2, der in einer Hülse 45.1 verschiebbar bzw. schwenkbar aufgenommen ist. Ein in der Hülse 45.1 angeordnetes Federelement 45.3 drückt den Sitzring 45.2 gegen den Ventilteller 51. Der Sitzring 45.2 kann sich innerhalb seiner Führung in der Hülse 45.1 schräg stellen, falls die Längsachsen von erstem Kupplungsstück 1 und zweitem Kupplungsstück 3 nicht parallel zueinander verlaufen, sondern einen Winkelfehler von wenigen Winkelgrad aufweisen.

Durch die Summe diese Einzelmaßnahmen, die sich gegenseitig ergänzen können, ist es möglich, eventuelle Positions- und/oder Winkelfehler zwischen erstem Kupplungsstück 1 und zweitem Kupplungsstück 3 auszugleichen, ohne Einschränkungen der Funktion und der Dichtheit.

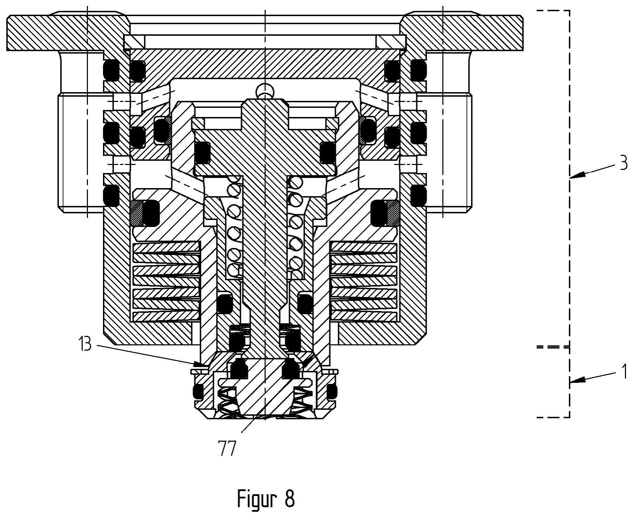

In der Figur 8 ist die dritte Ausführungsform einer Kupplungsvorrichtung in geschlossenem Zustand dargestellt. Es sind in dieser Figur nur sehr wenige Bezugszeichen eingetragen, um die Übersichtlichkeit zu verbessern.

Man kann gut erkennen, dass der (Innen-)Konus 77 des Aktuatorkolbens 23 sich auf dem kalottenförmig ausgebildeten Absatz 13 des ersten Kupplungsteils 1 zentriert. Natürlich ist es, wie oben erwähnt, auch möglich den Konus 77 ballig auszuführen und den Absatz 13 dann konisch.

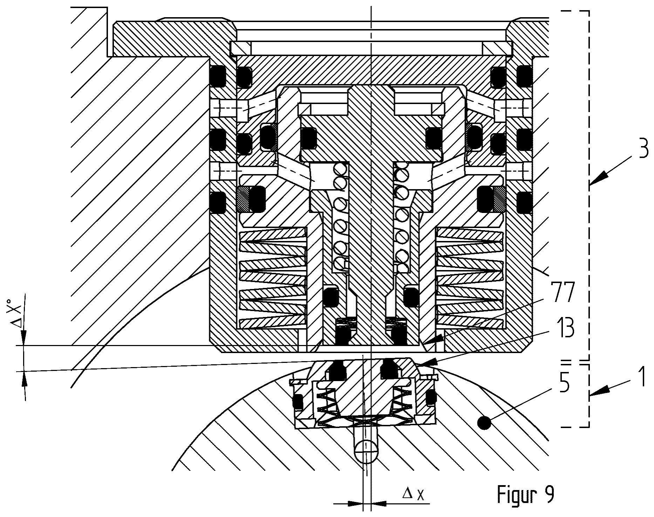

Anhand der Figur 9 werden die Begriffe "Versatz" und "Winkelfehler" illustriert. Der "Versatz" ist in der Figur 9 mit "Δx" bezeichnet. Er bezeichnet den Abstand der Längsachsen von erstem Kupplungsstück 1 und zweitem Kupplungsstück 3 am Berührpunkt der Kupplungsstücke parallel zur Längsachse des zweiten Kupplungsstücks 3.

Der Begriff "Winkelfehler" ist in der Figur 9 mit "ΔX°" bezeichnet. Er bezeichnet den Winkel, den die Anlageflächen von erstem Kupplungsstück 1 und zweitem Kupplungsstück 3 haben. Auch die Längsachsen von erstem Kupplungsstück 1 und zweitem Kupplungsstück 3 sind dann nicht parallel oder konzentrisch, sondern verlaufen unter dem Winkel "ΔX°" zueinander.

Herkömmliche Kupplungsvorrichtungen können weder einen nennenswerten "Versatz" noch einen nennenswerten "Winkelfehler" ausgleichen. Sie schließen dann nicht mehr und es treten Leckagemengen auf, die nicht akzeptabel sind.

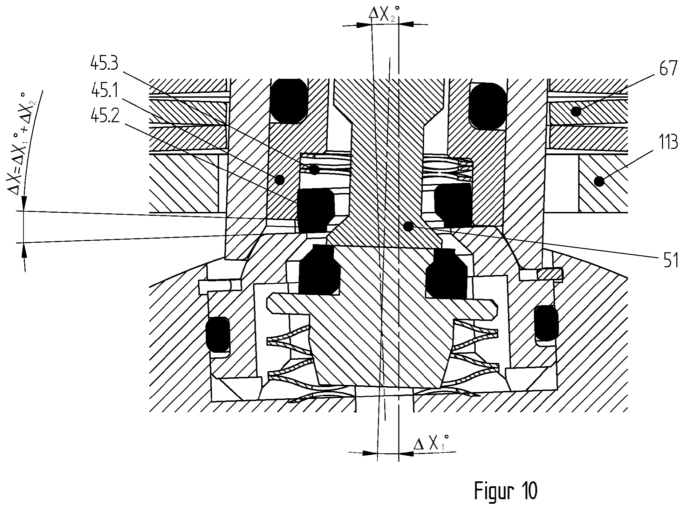

In der Figur 10 ist ein Detail desdritten Ausführungsbeispiels in geschlossenem Zustand dargestellt. Man erkennt gut, dass der Winkelfehler der Auflageflächen zueinander zugenommen hat, da durch die Zentrierung des Konus 77 zu dem Absatz 13 auch der Aktuatorkolben 23 und damit der Hülsenförmige Ventilsitz 45 eine Winkelauslenkung machen. Der Winkelfehler "ΔX°" setzt sich somit zusammen aus der Winkelauslenkung "Δ*X*1°" der Spindel 5 und der Winkelauslenkung *"*Δ*X*2°" des Aktuatorkolbens 23. In dieser Darstellung beträgt der Winkelfehler "ΔX°" ca. 4°.

Gut zu erkennen ist, dass wegen des kalottenförmigen Absatzes 13, der auch kegelstumpfförmig ausgebildet sein kann und dem Innenkonus 77, der kegelstumpfförmig, ballig kegelstumpfförmig oder kalottenförmig ausgebildet sein kann, trotz des Winkelfehlers "ΔX°" eine fluiddichte Verbindung zwischen erstem Kupplungsstück 1 und zweitem Kupplungsstück 3 etabliert wird.

Weil der Sitzring 45.2 federbelastet gegen den Ventilteller 51 gedrückt wird, macht es nichts aus, wenn der der Absatz 13 (wegen des Winkelfehlers "ΔX°") "schräg auf den Sitzring 45.2 auftrifft.

Die Fähigkeit der Kupplungsvorrichtung Winkelfehler und Versatz auszugleichen, erweitert deren Anwendungsgebiet ganz erheblich. Wie in der Figur 9 illustriert, kann nämlich das erste Kupplungssteil 1 in einer drehbar gelagerten Spindel 5 angeordnet sein. Die Drehposition dieser Spindel lässt sich nur innerhalb eines gewissen Bereichs von zum Beispiel +/- 3° steuern. Das bedeutet, dass bei einem Werkzeugwechsel, wenn die Kupplungsvorrichtung geschlossen werden muss, im Produktionsbetrieb regelmäßig ein Winkelfehler "ΔX°" von wenigen Winkelgrad auftreten wird. Wird die Spindel 5 zudem zum Beispiel durch den Antrieb (ohne Bezugszeichen) gehalten, dann kann durch die Winkelabweichung der Spindel ein Winkelfehler "ΔX°" und ein Positionsfehler "Δx" entstehen, der sich nicht durch das Schließen der Kupplungsvorrichtung selbst ausgleicht. Dann muss die Kupplungsvorrichtung in der Lage sein dies auszugleichen. Mit Hilfe der Kupplungsvorrichtung kann dieser Winkelfehler "ΔX°" und der Positionsfehler "Δx" ohne Funktionsstörungen oder Leckagen kompensiert werden.

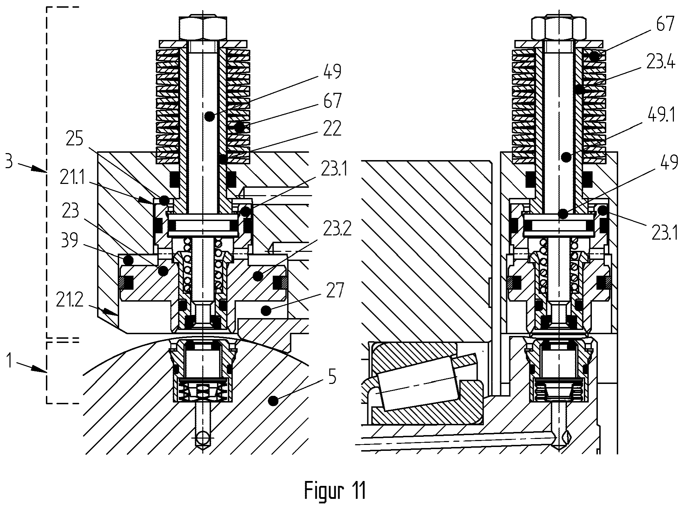

In der Figur 11 ist ein viertes Ausführungsbeispiel einer Kupplungsvorrichtung dargestellt. Die Unterschiede zu den anderen Ausführungsbeispielen betreffen das zweite Kupplungsteil 3.

Bei dem vierten Ausführungsbespiel ist zumindest der zweite Abschnitt 23.2 des Aktuatorkolbens 23 nicht rund, sondern hat eine ovale Form. Dementsprechend ist auch der auch der zweite Abschnitt 21.2 der Zylinderbohrung 21 oval im Querschnitt. Sowohl den ovalen zweiten Abschnitt 23.2 des Aktuatorkolbens 23 als auch den zweiten Abschnitt 21.2 der Zylinderbohrung 21 kann man zum Beispiel durch Unrund- Drehen oder Schleifen herstellen.

Wenn man annimmt, dass der zweite Abschnitt 23.2 des Aktuatorkolbens 23 und der der zweite Abschnitt 21.2 der Zylinderbohrung 21 elliptisch sind, dann ist es ausreichend, wenn die Nebenachse der Ellipse etwa gleich dem Durchmesser D 23.1 des ersten Abschnitt 23.1 des Aktuatorkolbens 23 ist.

Die Hauptachse der Ellipse ist deutlich größer als der Durchmesser D 23.1 des ersten Abschnitt 23.1 des Aktuatorkolbens 23. Dadurch ist es möglich, die Baulänge des zweiten Kupplungsteils 3 in einer Richtung deutlich zu reduzieren, ohne die Kolbenfläche des zweiten Abschnitts 23.2 des Aktuatorkolbens 23 zu reduzieren.

Bei dem vierten Ausführungsbeispiel sind die dritten Druckfedern 67 nicht in dem zweiten Zylinderraum 27 der angeordnet, sondern außerhalb des Gehäuse 113, 19, bzw. oberhalb des Deckels 24 (falls vorhanden).

Die Distanzhülse 22 und der Ventilstößel 49 sind durch das Gehäuse 113, 19 bzw. den Deckel 24 dichtend herausgeführt, damit die Federkraft der dritten Druckfeder 67 über den Ventilstößel 49 auf den Aktuatorkolben 23 wirken kann.

Der sonstige Aufbau und die hydraulischen Eigenschaften des vierten Ausführungsbeispiels entsprechen denen des zweiten und dritten Ausführungsbeispiels.

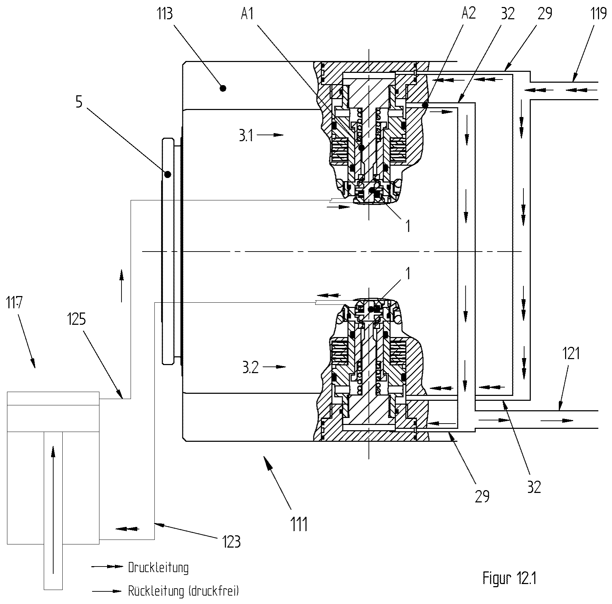

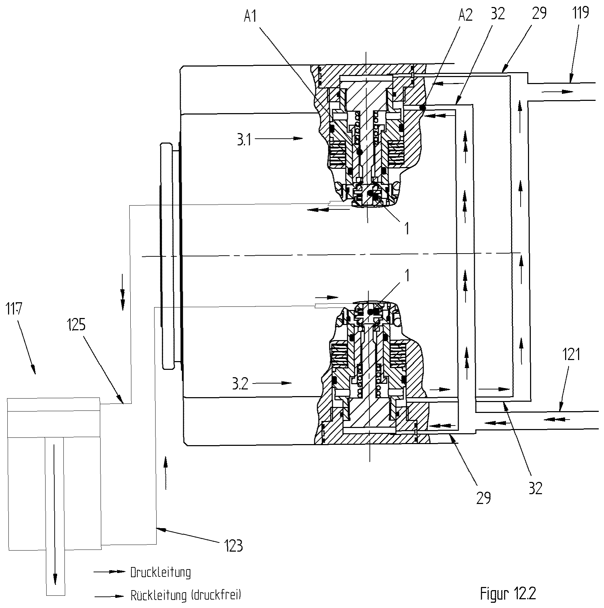

Anhand der Figuren 12.1 und 12.2 wird die Funktionsweise des zweiten und dritten Ausführungsbeispiels der Kupplungsvorrichtung innerhalb eines Gehäuses 113 eines angetriebenen Werkzeughalters 111 erläutert. In dem Gehäuse 113 des Werkzeughalters 111 sind zwei (Zahlwort) Kupplungsvorrichtungen (mit jeweils einem ersten Kupplungsteil 1 und jeweils einem zweiten Kupplungsteil 3) vorgesehen.

Die Kupplungsvorrichtungen verbindet einen Zylinderaufbau 117 in der Spindel mit den Fluidleitungen im Gehäuse 113 des Werkzeughalters 111.

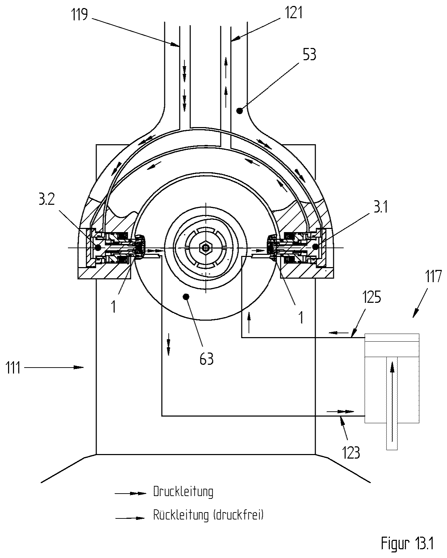

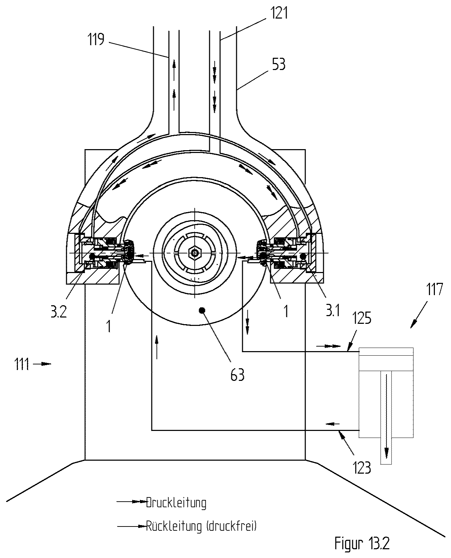

Anhand der Figuren 13.1 und 13.2 wird die Funktionsweise des zweiten und dritten Ausführungsbeispiels anhand eines Versorgungsbügels 53 mit zwei zweiten Kupplungsteilen 3 und einem Werkzeughalter 111 mit einem doppeltwirkenden Zylinderaufbau 117 illustriert und erläutert.

Um die hydraulische Verschaltung der Figuren 12.1 und 12.2 innerhalb des Werkzeughalters 111 zu verdeutlichen ist ein doppeltwirkender Zylinderaufbau 117, der sich innerhalb des Werkzeughalters oder seiner Spindel 5 befindet vereinfacht dargestellt. Jeweils ein Anschluss 123, 125 des Zylinderaufbaus 117 ist mit einem Anschluss eines der beiden ersten Kupplungsteile 1 verbunden.

Der in den Leitungen herrschende Druck wird durch die Zahl der Pfeile symbolisiert (Zwei Pfeile = hoher Druck; ein Pfeil = niedriger Druck).

In dem Gehäuse 113 sind eine erste Fluid-Leitung 119 und eine zweite Fluid-Leitung 121 vorhanden. Die erste Fluid-Leitung 119 ist mit der ersten Steuerleitung 29 eines zweiten Kupplungsteils 3.1 (oben in Figur 12.1) und der Steuer- und Versorgungsleitung 32 des anderen zweiten Kupplungsteils 3.2 (unten in Figur 12.1) verbunden.

Die zweite Fluid-Leitung 121 ist mit der Steuer- und Versorgungsleitung 32 eines zweiten Kupplungsteils 3.1 (oben in Figur 12.1) und mit der ersten Steuerleitung 29 des anderen zweiten Kupplungsteils 3.2 (unten in Figur 12.1) verbunden.

Die beiden zweiten Kupplungsteile 3.1, 3.2 sind also "über Kreuz" an die Fluid-Leitungen 119, 121 angeschlossen.

In der Figur 12.1 ist die Situation dargestellt, dass die erste Fluid-Leitung 119 mit unter Druck stehendem Fluid (siehe die zwei Pfeile) versorgt wird. Die zweite Fluid-Leitung 121 dient dann zur Abfuhr des aus dem Zylinderaufbau 117 abzuführenden (drucklosen) Fluids. Es ist aber auch möglich, die zweite Fluidleitung 121 mit einem niedrigeren Druck als die erste Fluidleitung 119 zu betreiben.

In der Figur 12.1 sind beide Kupplungsvorrichtungen geschlossen, d. h. es besteht eine Fluidverbindung zwischen der ersten Fluid-Leitung 119 und einem ersten Anschluss 123 des Zylinderaufbaus 117. Außerdem besteht eine Fluidverbindung zwischen der zweiten Fluid-Leitung 121 und einem zweiten Anschluss 125 des Zylinderaufbaus 117.

Das unter hohem Druck stehende Fluid der ersten Fluid-Leitung 119 gelangt über die erste Steuerleitung 29 in den ersten Zylinderraum 25 des zweiten Kupplungsteils 3.1 (oben in Figur 12.1). Dadurch vergrößert sich das Volumen des ersten Zylinderraums 25, der Aktuatorkolben 23 bewegt sich und öffnet das Wegeventil (sowie das Rückschlagventil des mit ihm zusammenwirkenden ersten Kupplungsteils 1).

Dabei gelangt kein unter hohem Druck stehendes Fluid (aus der ersten Fluid-Leitung 119) durch die geschlossene Kupplungsvorrichtung 3.1 zu dem Zylinderaufbau 117 des Werkzeughalters 111.

Vielmehr kann durch das erste Kupplungsteil 1 und das geöffnete zweite Kupplungsteil 3.1 Fluid, welches von dem Zylinderaufbau 117 am zweiten Anschluss 125 ausgeschoben wird, durch diese Kupplungsvorrichtung (umfassend ein erstes Kupplungsteil 1 und das zweite Kupplungsteil 3.1) in die zweite Fluid-Leitung 121 gelangen.

Anders ist die Situation bei der zweiten ebenfalls geschlossenen zweiten Kupplungsvorrichtung 3.2 (unten in Figur 12.1). Dort gelangt das unter hohem Druck stehende Fluid aus der ersten Fluid-Leitung 119 über die Steuer- und Versorgungsleitung 32 in den dritten Zylinderraum 39 und den Fluidraum 33 des zweiten Kupplungsteils 3.2 (unten in Figur 12.1). Dadurch vergrößert sich das Volumen des dritten Zylinderraums 39, der Aktuatorkolben 23 bewegt sich und öffnet das Wegeventil (sowie das Rückschlagventil 7 des mit ihm zusammenwirkenden ersten Kupplungsteils 1). Dadurch ist diese Kupplungsvorrichtung (umfassend ein erstes Kupplungsteil 1 und das zweite Kupplungsteil 3.2) ebenfalls geschlossen. Die aus dieser Bewegung des Aktuatorkolbens 23 resultierende Vergrößerung des ersten Zylinderraums 25 führt dazu, dass (druckloses) Fluid über die erste Steuerleitung 29 des zweiten Kupplungsteils 3.2 aus der zweiten Fluid-Leitung 121 angesaugt wird.

Bei dieser geschlossene Kupplungsvorrichtung 1, 3.2, gelangt unter hohem Druck stehendes Fluid (aus der ersten Fluid-Leitung 119) durch den dritten Zylinderraum und die Radialbohrung(en) 37 in den Fluidraum 33 und den oben im Zusammenhang mit der Figur 6 und 7 erläuterten Spalt (Drossel 75) mit der Fläche A1 zum ersten Kupplungsteil 1. Es gelangt von dort über den ersten Anschluss 123 in den Zylinderaufbau 117 und bewegt den in ihr befindlichen Kolben (nach oben in der Figur 12.1).

Durch die Bewegung des Kolbens im Zylinderaufbau 117 wird (druckloses) Fluid über den zweiten Anschluss 125 ausgeschoben und gelangt, wie oben erläutert, über die geschlossene Kupplungsvorrichtung 1, 3.1 in die zweite Fluid-Leitung 121.

In der Figur 12.2 ist die Situation dargestellt, dass die erste Fluid-Leitung 119 drucklos ist und in der zweiten Fluid-Leitung 121 ein hoher Druck ansteht. Im Ergebnis kehrt sich die Bewegungsrichtung des Zylinderaufbaus 117 um.

Bei dem zweiten Kupplungsteil 3.1 (oben in Figur 12.2) wird der Fluidraum 33 mit unter hohem Druck stehendem Fluid versorgt. In Folge dessen gelangt unter hohem Druck stehendes Fluid zum zweiten Anschluss 125 des Zylinderaufbaus 117.

Bei dem zweiten Kupplungsteil 3.2 (unten in Figur 12.2) wird der erste Zylinderraum 25 mit unter hohem Druck stehendem Fluid versorgt. Über diese Kupplungsvorrichtung 1, 3.2 wird das drucklose Fluid aus dem ersten Anschluss 123 abgeführt.

Die Figuren 13.1 und 13.2 zeigen eine Ansicht von vorne auf einen Werkzeughalter 111 und einen Versorgungsbügel 53, der mit zweiten Kupplungsteilen 3 gemäß Figur 6 und der zwei Fluidleitungen 119 und 121 ausgerüstet ist. Die Funktionsweise wurde bereits anhand der Figuren 12.1 und 12.2 im Detail erläutert. Vom Zylinderaufbau 117 der sich im Werkzeughalter bzw. dessen Spindel befindet sind der erste Anschluss 123, der zweite Anschluss 125 und der Zylinder 117 vereinfacht dargestellt.

Kurz gesagt: mit Hilfe der in Figur 6 und 7 gezeigten zweiten Kupplungsteile 3 und der in Figuren 12.1 und12.2 gezeigten Verschaltung ist es möglich mit nur zwei Fluid-Leitungen 119, 121
- den Zylinderaufbau 117 so anzusteuern, dass sich der Kolben und mit ihm die Kolbenstange in beide Richtungen bewegt,
- das aufgrund der Bewegung des Kolbens im Zylinderaufbau 117 verdrängte Fluid abzuführen und
- die Volumenänderung des ersten Zylinderraums 25 in einem der beiden zweiten Kupplungsteile 3 durch das Ausfahren des zweiten Kupplungsteils 3 zu kompensieren.
- Die Volumenänderung des dritten Zylinderraums im anderen zweiten Kupplungsteil 3 beim Ausfahren des zweiten Kupplungsteils 3 zu kompensieren

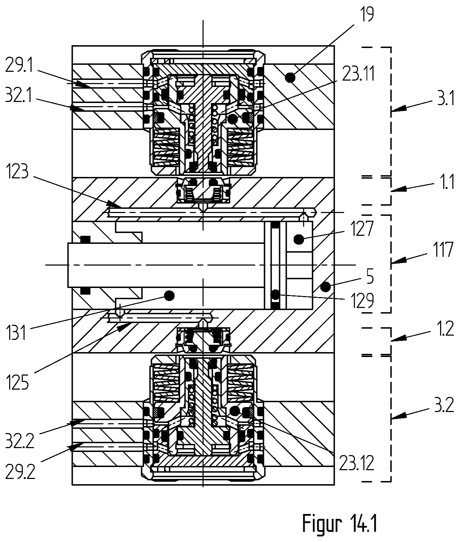

Anhand der Figuren 14.1 bis 14.3 wird die Übergabe des Hydraulikfluids von einem Gehäuse 19 auf eine Spindel 5 illustriert, die mit einem doppeltwirkenden Zylinderaufbau 117 ausgerüstet ist. Anhand dieser Figuren lässt sich auch gut verdeutlich, was unter dem Begriff "über Kreuz geschaltet" zu verstehen ist.

Weil der Zylinderaufbau 117 doppeltwirkend ist, sind in der Spindel 5 zwei Anschlüsse 123, 125 und zwei (Zahlwort) erste Kupplungsteile 1.1 und 1.2 vorgesehen. Im Gehäuse 19 sind zwei (Zahlwort) zweite Kupplungsteile 3.1, 3.2 vorgesehen.

Das erste Kupplungsteil 1.1 ist mit dem Anschluss 123 des Zylinderaufbaus 117 verbunden. Das erste Kupplungsteil 1.2 ist mit dem Anschluss 125 des Zylinderaufbaus 117 verbunden.

In der Figur 14.1 ist die Spindel 5 so positioniert, dass jeweils ein erstes Kupplungsteil 1 und ein zweites Kupplungsteil 3 einander gegenüberliegen. Sie berühren sich (noch) nicht. Das Fluid in den ersten Steuerleitungen 29.1, 29.2 sowie den Steuer- und Versorgungsleitungen 32.1, 32,2 ist noch drucklos.

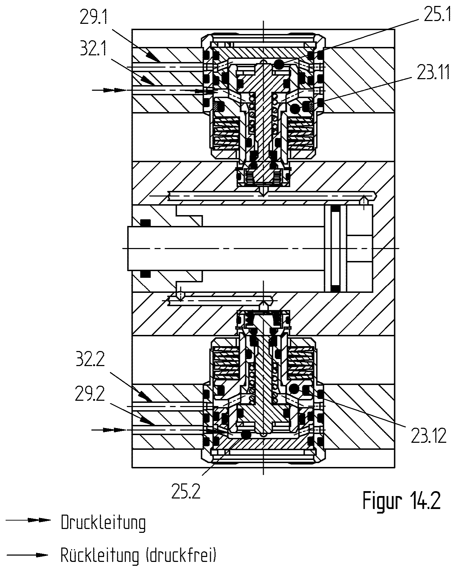

In der Figur 14.2 steht das Fluid in der Steuer- und Versorgungsleitung 32.1 unter Druck. Das ist durch zwei Pfeile angedeutet. Die Richtung der Pfeile zeigt die Strömungsrichtung an. In Folge dessen steht auch der dritte Zylinderraum 39 unter Druck. In Folge dessen bewegt sich der Aktuatorkolben 23.11 in Richtung des ersten Kupplungsteil 1.1.

Weil die zweiten Kupplungsteile 3.1 und 3.2 "über Kreuz geschaltet" sind, steht dieser Druck auch in der Steuerleitung 29.2 des zweiten Kupplungsteils 3.2 (unten in den Figuren 14.1 bis 14.3) an. Von dort gelangt das unter Druck stehende Fluid in ersten Zylinderraum 25.2 des zweiten Kupplungsteils 3.2. In Folge dessen bewegt sich auch der Aktuatorkolben 23.12 in Richtung des ersten Kupplungsteil 1.2.

Wichtig ist in diesem Zusammenhang, dass sich beide Aktuatorkolben 23 in Richtung der ersten Kupplungsstücke 1 bewegen, obwohl in einem Fall Druck in der Steuer- und Versorgungsleitung 32.1 und im anderen Fall in der ersten Steuerleitung 29.1 ansteht. Trotzdem bewegen sich beide Aktuatorkolben 23.11 und 23.12 in Richtung der ihnen zugeordneten ersten Kupplungsteile 1.

In der in Figur 14.2 dargestellten Position der Aktuatorkolben 23 sitzen die hülsenförmigen Ventilsitze 45 auf den Stirnflächen den Absätzen 13 der ersten Kupplungsteile 1 auf und werden ggf. durch die Konusse 77 der Aktuatorkolben 23 bei starken Winkel- oder Positionsabweichungen schon etwas vorzentriert. Weiterhin liegen die Dichtungen auf und sorgen dafür, dass kein Fluid nach außen gelangt. Die Rückschlageventile 7 der ersten Kupplungsstücke 1 sind noch geschlossen, weil die Ventilstößel 49 der zweiten Kupplungsteile 3 diese(noch) nicht in Richtung der ersten Kupplungsteile 1.1 bzw. 1.2 drücken. Genauso drückt der Absatz 13 (noch) nicht die hülsenförmigen Ventilsitze 45 so weit in Richtung der zweiten Kupplungsteile 3, dass der Sitzring 45.2 vom Ventilteller 51 abhebt.

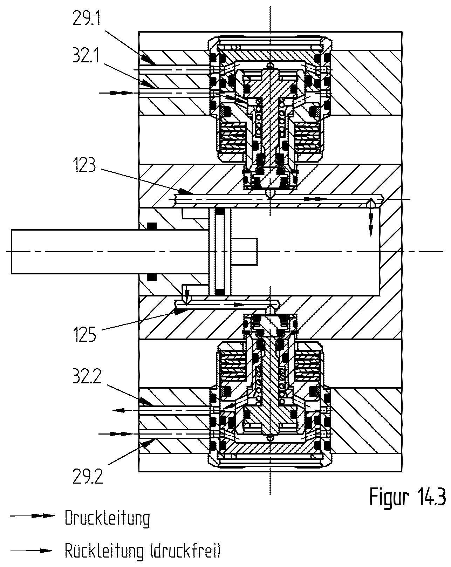

In der in Figur 14.3 dargestellten Position haben sich (verglichen mit der in Figur 14.2 dargestellten Position) Aktuatorkolben 23.11, 23.12 so weit in Richtung der ersten Kupplungsteile 1 bewegt, dass die Ventilstößel 49 der ersten Kupplungsteile 3 die Ventilglieder 9 der Rückschlagventile 7 gegen die Kraft der ersten Druckfeder 17 von ihren Sitzen abgehoben hat. Gleichzeitig wurde der hülsenförmige Ventilsitz durch den Absatz 13 in Richtung des zweiten Kupplungsteils gedrückt so dass der Sitzring 45.2 vom Ventilteller 51 abhebt. D. h. die Kupplungsvorrichtungen sind offen (Offenstellung).

In der Offenstellung strömt das unter Druck stehende Fluid von der Steuer- und Versorgungsleitung 29.1 durch die offene Kupplungsvorrichtung 3.1, 1.1 durch den Anschluss 123 in einen ersten Arbeitsraum 127 des Zylinderaufbau 117 und bewegt dessen Kolben 129 (nach links in den Figuren 14.2 und 14.3).

Der Kolben 129 verdrängt dabei das drucklose Fluid aus dem anderen Zylinderraum 131. Dieses verdrängte Fluid gelangt durch den Anschluss 125, die offene Kupplungsvorrichtung 1.2, 3.2 in die Steuer- und Versorgungsleitung 29.2. Wenn der Kolben 129 des Zylinderaufbaus 117 in die entgegengesetzte Richtung bewegt werden soll, dann werden die Steuer- und Versorgungsleitung 32.12 des zweiten Kupplungsteils 3.2 (unten in den Figuren 14.1 bis 14.3) und die Steuerleitung 29.1 des zweiten Kupplungsteils 3.1 (oben in den Figuren 14.1 bis 14.3) mit unter Druck stehendem Fluid beaufschlagt.

### Bezugszeichenliste

- 1: erstes Kupplungsteil
- 3: zweites Kupplungsteil
- 5: Spindel
- 7: Rückschlagventil
- 9: Ventilglied
- 11: Ventilgehäuse
- 13: Absatz
- 15: Öffnung
- 16: Dichtring
- 17: erste Druckfeder
- 19: Gehäuse
- 21: Zylinderbohrung
- 23: Aktuatorkolben
- 24: Deckel
- 25: erster Zylinderraum
- 27: zweiter Zylinderraum
- 29: erste Steuerleitung
- 31: zweite Steuerleitung
- 32: Steuer- und Versorgungsleitung
- 33: Fluidraum
- 37: Radialbohrung
- 39: Umfangsnut, dritter Zylinderraum
- 41: Versorgungsleitung
- 43: zweite Druckfeder
- 45: hülsenförmiger Ventilsitz
- 45.1: Hülse
- 45.2: Sitzring
- 45.3: Federelement
- 47: Führungsbohrung
- 49: Ventilstößel
- 51: Ventilteller
- 53: Versorgungsbügel
- 63: Zentrieraufnahme
- 65: Bund
- 67: dritte Druckfeder, Tellerfeder
- 69: Ringfläche
- 73: Vorsprung
- 75: Drossel
- 77: Konus
- 79: erste (Aktuatorkolben-)Dichtung
- 81: zweite (Aktuatorkolben-)Dichtung
- 101: Roboterhand
- 103: Greifer
- 105: Adapter
- 107: Schneidwerkzeug, Bohrer
- 109: Hohlschaft
- 111: Werkzeughalter
- 113: Gehäuse des Werkzeughalters
- 115: Andockabschnitt
- 117: Zylinderaufbau
- 119: erste Fluid-Leitung
- 121: zweite Fluid-Leitung
- 123: erster Anschluss des Zylinderaufbaus 117
- 125: zweiter Anschluss des Zylinderaufbaus 117
- 127: erster Zylinderraum
- 129: Kolben
- 131: zweiter Zylinderraum

## Patentansprüche

1. Versorgungsbügel (53) umfassend mindestens ein zweites Kupplungsteil (3), das geeignet ist mit einem ersten Kupplungsteil (1) zusammenzuwirken, um eine Kupplungsvorrichtung für ein Fluid auszubilden,
wobei das erste Kupplungsteil (1) als federbelastetes und entsperrbares Rückschlagventil (7) ausgebildet ist,
wobei das zweite Kupplungsteil (3) einen in einem Gehäuse (19, 113) verschiebbar geführten Aktuatorkolben (23) umfasst,
wobei in dem Aktuatorkolben (23) ein nach außen öffnendes Wegeventil angeordnet ist,
wobei der Aktuatorkolben (23) eine Zylinderbohrung (21) in einen ersten Zylinderraum (25) und einen zweiten Zylinderraum (27) unterteilt,
wobei der Versorgungsbügel (53) einen C-förmigen Andockabschnitt (115) umfasst, und
wobei an dem Andockabschnitt (115) mindestens zwei zweite Kupplungsteile (3) angeordnet sind.

2. Versorgungsbügel (53) umfassend mindestens ein zweites Kupplungsteil (3), das geeignet ist mit einem ersten Kupplungsteil (1) zusammenzuwirken, um eine Kupplungsvorrichtung für ein Fluid auszubilden,
wobei das erste Kupplungsteil (1) als federbelastetes und entsperrbares Rückschlagventil (7) ausgebildet ist,
wobei das zweite Kupplungsteil (3) einen in einem Gehäuse (19, 113) verschiebbar geführten Aktuatorkolben (23) umfasst,
wobei in dem Aktuatorkolben (23) ein nach außen öffnendes Wegeventil angeordnet ist,
wobei der Aktuatorkolben (23) als Stufenkolben ausgebildet ist,
wobei ein erster Teil (23.1) des Aktuatorkolbens (23) den ersten Zylinderraum (25) begrenzt,
wobei ein zweiter Teil (23.2) des Aktuatorkolbens (23) den zweiten Zylinderraum (27) begrenzt, und
dass ein Durchmesser (D_{23.1}) des ersten Teils (23.2) des Aktuatorkolbens (23) kleiner ist als ein Durchmesser (D_{23.2}) des zweiten Teils (23.2) des Aktuatorkolbens (23), so dass am Übergang zwischen dem ersten Teil (23.1) und dem zweiten Teil (23.2) des Aktuatorkolbens (23) ein dritter Zylinderraum (39) mit einer Ringfläche (69) vorhanden ist, wobei der Versorgungsbügel (53) einen C-förmigen Andockabschnitt (115) umfasst, und
wobei an dem Andockabschnitt (115) mindestens zwei zweite Kupplungsteile (3) angeordnet sind.

3. Versorgungsbügel (53) nach einem der Ansprüche 1 oder 2, **dadurch gekennzeichnet, dass** jeweils ein zweites Kupplungsteil (3) mit einem ersten Kupplungsteil (1) eines Werkzeughalters (111) kompatibel ist.

4. Versorgungsbügel (53) nach dem Anspruch 3 und der Werkzeughalter (111), wobei der Werkzeughalter (111) ein Gehäuse (19, 113), eine Spindel (5), eine in der Spindel (5) angeordnete Zentrieraufnahme (63) für die Aufnahme eines Adapters (105) und ein von einem Fluid betätigtes Spannsystem zum Spannen und Lösen des Adapters (105) in der Zentrieraufnahme (63) umfasst, wobei in der Spindel (5) das erste Kupplungsteil (1) vorhanden ist, wobei in dem Gehäuse (19, 113) das zweite Kupplungsteil (3) vorhanden ist, wobei das erste Kupplungsteil (1) und das zweite Kupplungsteil (3) geeignet sind, zusammenzuwirken, um eine Kupplungsvorrichtung für ein Fluid auszubilden, wobei das erste Kupplungsteil (1) als federbelastetes und entsperrbares Rückschlagventil (7) ausgebildet ist, wobei das zweite Kupplungsteil (3) einen in dem Gehäuse (19, 113) verschiebbar geführten Aktuatorkolben (23) umfasst, und wobei in dem Aktuatorkolben (23) ein nach außen öffnendes Wegeventil angeordnet ist.

5. Versorgungsbügel (53) nach einem der Ansprüche 1 bis 4, **dadurch gekennzeichnet, dass** der Versorgungsbügel (53) zwei zweite Kupplungsteile (3.1, 3.2) sowie eine erste Fluidleitung (119) und eine zweite Fluidleitung (121)umfasst, dass jedes zweite Kupplungsteil (3.1, 3.2) eine erste Steuerleitung (29) und eine zweite Steuerleitung (31) umfasst, dass die erste Steuerleitung (29) des ersten zweiten Kupplungsteils (3.1) und die zweite Steuerleitung (31) des zweiten zweiten Kupplungsteils (3.2) an die erste Fluidleitung (119) angeschlossen sind, und dass die zweite Steuerleitung (31) des ersten zweiten Kupplungsteils (3.1) und die erste Steuerleitung (29) des zweiten zweiten Kupplungsteils (3.2) an die zweite Fluidleitung (121) angeschlossen sind.

6. Versorgungsbügel (53) nach einem der vorhergehenden Ansprüche, **dadurch gekennzeichnet, dass** er mindestens zwei zweite Kupplungsteile (3) umfasst, und dass jeweils ein zweites Kupplungsteil (3) mit einem ersten Kupplungsteil (1) eines Werkzeughalters (111) kompatibel ist.

7. Versorgungsbügel (53) nach Anspruch 6, **dadurch gekennzeichnet, dass** die mindestens zwei zweiten Kupplungsteile (3) so angeordnet sind, dass sich die von den Ventilstößeln (49) der zweiten Kupplungsteile (3) auf die ersten Kupplungsteile (1) ausgeübten Kräfte ganz oder zumindest weitgehend aufheben.

8. Versorgungsbügel (53) nach einem der vorhergehenden Ansprüche, **dadurch gekennzeichnet, dass** ein Spiel zwischen der Zylinderbohrung (21) und dem Aktuatorkolben (23) an einem dem ersten Kupplungsteil (1) abgewandten Ende des Aktuatorkolbens (23) kleiner ist als ein Spiel zwischen der Zylinderbohrung (21) und dem Aktuatorkolben (23) an seinem dem ersten Kupplungsteil (1) zugewandten Ende.

9. Versorgungsbügel (53) nach einem der vorhergehenden Ansprüche, **dadurch gekennzeichnet, dass** an dem dem ersten Kupplungsteil (1) abgewandten Ende des Aktuatorkolbens (23) eine erste Dichtung (79) und an dem dem ersten Kupplungsteil (1) zugewandten Ende des Aktuatorkolbens (23) eine zweite Dichtung (81) vorgesehen ist, und dass die zweite Dichtung (81) in radialer Richtung so nachgiebig ist, dass sie den zweiten Zylinderraum (27) auch dann abdichtet, wenn der Aktuatorkolben (23) gegenüber der Zylinderbohrung (21) schräggestellt oder versetzt ist.

10. Versorgungsbügel (53) nach einem der Ansprüche 2 bis 9, **dadurch gekennzeichnet, dass** die zweite Dichtung (81) den dritten Zylinderraum (39) gegen den zweiten Zylinderraum (27) abdichtet.

11. Versorgungsbügel (53) nach einem der vorhergehenden Ansprüche, **dadurch gekennzeichnet, dass** in dem Aktuatorkolben (23) ein Fluidraum (33) ausgebildet ist, dass der Fluidraum (33) an einem Ende geschlossen ist, dass der Fluidraum (33) in eine Führungsbohrung (47) mündet, dass ein hülsenförmiger Ventilsitz (45) des Wegeventils in der Führungsbohrung (47) verschiebbar aufgenommen ist, und dass ein Ventilstößel (49) des Wegeventils mit dem Aktuatorkolben (23) gekoppelt ist und durch den hülsenförmigen Ventilsitz (45) ragt, so dass ein Ventilteller (51) des Ventilstößels (49) den Weg des Ventilsitzes (45) in der Führungsbohrung (47) begrenzt.

12. Versorgungsbügel (53) nach Anspruch 11, **dadurch gekennzeichnet, dass** der Ventilsitz (45) eine Hülse (45.1) und einen in der Hülse (45.1) aufgenommenen und geführten Sitzring (45.2) sowie ein Federelement (45.3) umfasst, und dass sich das Federelement (45.3) einenends gegen die Hülse (45.1) und anderends gegen den Sitzring (45.2) abstützt.

13. Versorgungsbügel (53) nach einem der Ansprüche 11 oder 12, **dadurch gekennzeichnet, dass** in dem Fluidraum (33) eine zweite Druckfeder (43) angeordnet ist, und dass eine von der zweiten Druckfeder (43) auf den Ventilsitz (45) ausgeübte Federkraft den Ventilsitz (45) gegen den Ventilteller (51) des Ventilstößels (49) drückt.

14. Versorgungsbügel (53) nach einem der Ansprüche 10 bis 13, **dadurch gekennzeichnet, dass** der Fluidraum (33) über eine außen am Aktuatorkolben (23) vorhandene Umfangsnut (39) und mindestens eine Radialbohrung (37) mit einer Versorgungsleitung (41, 121) im Gehäuse (19, 113) oder im Versorgungsbügel (53) fluidisch mindestens in der Offenstellung des Wegeventils verbunden ist und mit Fluid versorgt wird.

15. Versorgungsbügel (53) nach einem der vorhergehenden Ansprüche, **dadurch gekennzeichnet, dass** der erste Zylinderraum (25) über eine erste Steuerleitung (29, 119)) mit Fluid versorgt werden kann.

16. Versorgungsbügel (53) nach einem der vorhergehenden Ansprüche, **dadurch gekennzeichnet, dass** der zweite Zylinderraum (27) über eine zweite Steuerleitung (31) mit Fluid versorgt werden kann.

17. Versorgungsbügel (53) nach einem der vorhergehenden Ansprüche, **dadurch gekennzeichnet, dass** in dem zweiten Zylinderraum (27) oder außerhalb des Gehäuses (19, 113) oder des Versorgungsbügels (53) eine dritte Druckfeder (67) angeordnet ist, deren auf den Aktuatorkolben (23) wirkende Federkraft den (Druck-)Kräften eines in dem ersten Zylinderraum (25) oder/und dritten Zylinderraums (39) befindlichen Fluids entgegenwirkt.

18. Versorgungsbügel (53) nach einem der Ansprüche 12 bis 17, **dadurch gekennzeichnet, dass** der Fluidraum (33) über eine Versorgungsleitung (41) oder eine kombinierte Steuer- und Versorgungsleitung (32) mindestens in der Offenstellung des Wegeventils mit Fluid versorgt werden kann.

19. Versorgungsbügel (53) nach einem der Ansprüche 2 bis 18, **dadurch gekennzeichnet, dass** der dritte Zylinderraum (39) und der Fluidraum (33) gleichzeitig über die Steuer- und Versorgungleitung (32) mit Fluid versorgt werden.

20. Versorgungsbügel (53) nach einem der Ansprüche 10 bis 18, **dadurch gekennzeichnet, dass** zwischen dem Fluidraum (33) und dem Wegeventil eine Drossel (75) oder Blende vorhanden ist, so dass bei geöffnetem Wegeventil der Abfluss von unter Druck stehendem Fluid aus dem Fluidraum (33) begrenzt und ein Mindestüberdruck im Fluidraum (33) und im dritten Zylinderraum (39) aufrecht erhalten bleibt.

21. Versorgungsbügel (53) nach Anspruch 20, **dadurch gekennzeichnet, dass** die Drossel (75) als Ringspalt zwischen dem Ventilstößel (49) und dem Ventilsitz (45) bzw. dessen Hülse (45.1) ausgebildet ist.

22. Versorgungsbügel (53) nach einem der vorhergehenden Ansprüche, **dadurch gekennzeichnet, dass** mindestens der zweite Abschnitt (23.2) des Aktuatorkolbens (23) einen ovalen oder elliptischen Querschnitt hat, und dass mindestens der zweite Abschnitt (21.2) der Zylinderbohrung (21) einen ovalen oder elliptischen Querschnitt hat.

23. Versorgungsbügel (53) nach einem der vorhergehenden Ansprüche, **dadurch gekennzeichnet, dass** das Rückschlagventil (7) des ersten Kupplungsteils (1) ein Ventilgehäuse (11) umfasst, dass an dem Ventilgehäuse (11) eine mit dem Rückschlagventil (7) in Verbindung stehende Öffnung (15) für das Fluid ausgebildet ist, dass die Öffnung (15) in dem Absatz (13) des Ventilgehäuses (11) ausgebildet ist, dass bei geschlossener Kupplungsvorrichtung der Absatz (13) in die Führungsbohrung (47) des zweiten Kupplungsteils (3) eintaucht und der Ventilsitz (45) des Wegeventils von dem Ventilteller (51) des Ventilstößels (49) abhebt, und dass eine Leitung (18) in dem Gehäuse (19, 113) oder einer Spindel (5) vom Rückschlagventil (7) freigegeben bzw. verschlossen wird.

24. Versorgungsbügel (53) nach einem der vorhergehenden Ansprüche, **dadurch gekennzeichnet, dass** der Absatz (13) des Ventilgehäuses (11) kegelstumpfförmig oder kalottenförmig ausgebildet ist.

25. Versorgungsbügel (53) nach einem der vorhergehenden Ansprüche, **dadurch gekennzeichnet, dass** der Aktuatorkolben (23) an seinem dem ersten Kupplungsteil (1) zugewandten Ende einen Konus (77) oder eine Kalotte aufweist, und dass das erste Kupplungsteil (1) an seinem dem zweiten Kupplungsteil (3) zugewandten Ende einen Absatz (13) aufweist.

26. Drehmaschine oder Bearbeitungszentrum, **dadurch gekennzeichnet, dass** sie mit mindestens einem Versorgungsbügel (53) nach einem der vorhergehenden Ansprüche ausgerüstet ist.

27. Drehmaschine oder Bearbeitungszentrum nach dem Anspruch 26, **dadurch gekennzeichnet, dass** die fluidische Betätigung des Spannsystems einen Zylinderaufbau (117) umfasst, und dass für das Spannen und das Lösen des Spannsystems mindestens ein erstes Kupplungsteil (1) für die Versorgung des Zylinderaufbaus (117) vorgesehen ist, der mit dem zweiten Kupplungsteil (3) des Versorgungsbügels (53) zusammenwirkt.

28. Handhabungsvorrichtung oder Roboter, **dadurch gekennzeichnet, dass** die Handhabungsvorrichtung oder der Roboter mit mindestens einem Versorgungsbügel (53) nach einem der Ansprüche 1 bis 25 ausgerüstet ist.
